# EUROPEAN PATENT APPLICATION

(11) **EP 4 321 235 A1**
(43) Date of publication of application: **14.02.2024**
(21) Application number: 23157247.0
(22) Date of filing: 17.02.2023
(51) Int. Cl.: B01D 53/04, B01D 53/32

(54) **CARBON DIOXIDE CAPTURE SYSTEM AND CARBON DIOXIDE CAPTURE METHOD**

(30) Priority: 08.08.2022 JP 2022126406
(71) Applicant: KABUSHIKI KAISHA TOSHIBA, Minato-ku Tokyo 105-0023 (JP)
(72) Inventor: Saito, Hitomi, Tokyo, 105-0023 (JP); Miyamoto, Hirohisa, Tokyo, 105-0023 (JP)
(74) Representative: Hoffmann Eitle

(57) **Abstract**

A carbon dioxide capture system (1) of an approach includes an intake unit (2), an electrolysis unit (E1-En), a power supply unit (40), and a capture unit (30). The intake unit (2) takes in gas by utilizing gaseous flow around the intake unit (2), and, in the electrolysis unit (E1-En), an adsorbent can adsorb and release carbon dioxide by an adjustment of an electric potential of the electrolysis unit (E1-En). The power supply unit (40) adjusts the electric potential so as to adsorb carbon dioxide from the flowing gas to the adsorbent and release the carbon dioxide from the adsorbent in the electrolysis unit (E1-En). The capture unit (30) collects the carbon dioxide released from the adsorbent after adsorption to the adsorbent.

## Description

### FIELD

Disclosures described herein relate generally to a carbon dioxide capture system and a carbon dioxide capture method.

### BACKGROUND

There is a carbon dioxide capture system that is used to separate carbon dioxide from a gas and capture the separated carbon dioxide. In such a carbon dioxide capture system, a gas is flowed into an adsorption unit that includes an adsorbent capable of adsorbing and releasing carbon dioxide, and the carbon dioxide contained in the flowed gas is adsorbed by the adsorbent, thereby separating the carbon dioxide from the gas. Then, after the residual gas from which the carbon dioxide has been adsorbed by the adsorbent is discharged from the adsorption unit, the carbon dioxide adsorbed on the adsorbent is released from the adsorbent, and the carbon dioxide released from the adsorbent is captured.

Such a carbon dioxide capture system as described above requires a fan, a compressor, and the like in order to efficiently introduce the gas into the system. Accordingly, the space for the fan, the compressor, and the like in the entire system becomes large and the piping becomes complicated. Therefore, it is required to simplify the configuration of the carbon dioxide capture system by making it possible to introduce a gas into an adsorption unit including an adsorbent without providing a fan or the like or making it possible to release adsorbed carbon dioxide from the adsorbent without heating the adsorbent.

### BRIEF DESCRIPTION OF THE DRAWINGS

FIG. 1 is a schematic diagram showing a carbon dioxide capture system according to a first approach.
FIG. 2 is a schematic diagram showing an example of any one of electrolysis units in the carbon dioxide capture system according to the first approach.
FIG. 3 is a schematic enlarged view of a part of an adsorption layer of a working electrode in an electrolysis cell shown in FIG. 2.
FIG. 4 is a diagram showing an example of an MOF included in an adsorption member of the electrolysis cell in the first approach.
FIG. 5 is a diagram showing an example of a covalent-organic frameworks (COF) included in an adsorption member of the electrolysis cell in the first approach.
FIG. 6 is a schematic diagram showing an example of a state in which carbon dioxide is adsorbed on the adsorption member of the electrolysis cell of any one electrolysis unit in the carbon dioxide capture system according to the first approach.
FIG. 7 is a schematic diagram showing an example of a state in which carbon dioxide is adsorbed on the adsorption member of the electrolysis cell of any one electrolysis unit in the carbon dioxide capture system according to the first approach, which is different from FIG. 6.
FIG. 8 is a schematic diagram showing an example of a state in which excess gas is discharged from any one electrolysis unit after the state of FIG. 6 or the state of FIG. 7 in the carbon dioxide capture system according to the first approach.
FIG. 9 is a schematic diagram showing an example of a state in which carbon dioxide adsorbed by any one electrolysis unit is released from the adsorption member of the electrolysis cell after the state of FIG. 8 in the carbon dioxide capture system according to the first approach.
FIG. 10 is a schematic diagram showing an example of a state in which carbon dioxide released by the adsorption member is discharged from any one electrolysis unit after the state of FIG. 9 in the carbon dioxide capture system according to the first approach.
FIG. 11 is a schematic diagram showing a state in which any one electrolysis unit is returned to atmospheric pressure after the state of FIG. 10 in the carbon dioxide capture system according to the first approach.
FIG. 12 is a schematic diagram showing a carbon dioxide capture system according to a modification of the first approach.
FIG. 13 is a schematic diagram showing an example of a state in which excess gas is discharged from any one electrolysis unit after the state of FIG. 6 in the carbon dioxide capture system according to the modification shown in FIG. 12.
FIG. 14 is a schematic diagram showing an example of a state in which carbon dioxide released by the adsorption member is discharged from any one electrolysis unit after the state of FIG. 9 in the carbon dioxide capture system according to the modification shown in FIG. 12.
FIG. 15 is a schematic diagram showing a state in which any one electrolysis unit is returned to atmospheric pressure after the state of FIG. 14 in the carbon dioxide capture system according to the modification shown in FIG. 12.
FIG. 16 is a schematic diagram showing a carbon dioxide capture system according to a second approach.
FIG. 17 is a schematic diagram showing an example of a state in which carbon dioxide is adsorbed on the adsorption member of the electrolysis cell of the most upstream electrolysis unit in the carbon dioxide capture system according to the second approach.
FIG. 18 is a schematic diagram showing an example of a state in which excess gas is discharged from the most upstream electrolysis unit after the state of FIG. 17 in the carbon dioxide capture system according to the second approach.
FIG. 19 is a schematic diagram showing an example of a state in which carbon dioxide adsorbed by the most upstream electrolysis unit is released from the adsorption member of the electrolysis cell after the state of FIG. 18 in the carbon dioxide capture system according to the second approach.
FIG. 20 is a schematic diagram showing an example of a state in which, after the state of FIG. 19, the carbon dioxide is flowed from the most upstream electrolysis unit into the second most upstream electrolysis unit, and the carbon dioxide flowing in the second most upstream electrolysis unit is adsorbed on the adsorption members of the electrolysis cell in the carbon dioxide capture system according to the second approach.
FIG. 21 is a schematic diagram showing an example of a state in which excess gas is discharged from the second most upstream electrolysis unit after the state of FIG. 20 in the carbon dioxide capture system according to the second approach.
FIG. 22 is a schematic view of any one electrolysis unit provided in a carbon dioxide capture system according to a third approach.
FIG. 23 is a diagram showing an example of a compound having redox activity contained in an electrolytic solution of an electrolysis cell in the third approach.
FIG. 24 is a schematic diagram showing a state in which carbon dioxide is adsorbed by an adsorbent contained in the electrolytic solution of the electrolysis cell in any one electrolysis unit in the carbon dioxide capture system according to the third approach.
FIG. 25 is a schematic diagram showing a state in which the adsorbed carbon dioxide is released from the adsorbent contained in the electrolytic solution of the electrolysis cell in any one electrolysis unit in the carbon dioxide capture system according to the third approach.
FIG. 26 is a schematic diagram showing a carbon dioxide capture system according to a fourth approach.
FIG. 27 is a schematic view of any one electrolysis unit provided in a carbon dioxide capture system according to the fourth approach.

### DETAILED DESCRIPTION

A carbon dioxide capture system according to an approach includes an intake unit, an electrolysis unit, a power supply unit, and a capture unit. The intake unit takes in gas through an intake port by utilizing gaseous flow around intake unit. The electrolysis unit includes an adsorbent which can adsorb and release carbon dioxide by an adjustment of an electric potential of the electrolysis unit, and the gas flows from the intake port into the electrolysis unit. The power supply unit adjusts the electric potential of the electrolysis unit so as to adsorb carbon dioxide from the flowing gas to the adsorbent and release the carbon dioxide from the adsorbent in the electrolysis unit. The capture unit collects the carbon dioxide released from the adsorbent after adsorption to the adsorbent.

Approaches will be described below with reference to the drawings.

In the approaches, a carbon dioxide capture system is provided. In the dioxide capture system described below, a gas intake unit is arranged in an environment in which gaseous flow (environmental wind) already exists. The environment in which a flow of gas already exists is not limited thereto, and examples thereof include the upper part of a mountain, an offshore including a coast, a valley, a dam, a high place such as a high-rise building, the gap between buildings, the station yard of a metro station, an exhaust port connected to the aboveground, a gas introduction port to the underground, the inner cylinder of an elevator, a tunnel, the exhaust port and gas introduction port of a large-scale indoor facility, the surrounding environment of a wind power plant, and the exhaust port of a factory, a plant, and the like. Examples of the environmental wind include a wind naturally generated by an atmospheric pressure difference, a wind generated by a temperature difference, a wind generated by an object or gas passing through a tubular or narrowed portion, and a wind generated by a pressure difference between indoor and outdoor. In the carbon dioxide capture system, the flow of gas in the environment in which the intake unit is arranged is used to flow the gas into the electrolysis unit to be an adsorption unit. Then, carbon dioxide is separated from the flowed gas, and the separated carbon dioxide is captured by performing a process described later using the electrolysis unit.

### (First Approach)

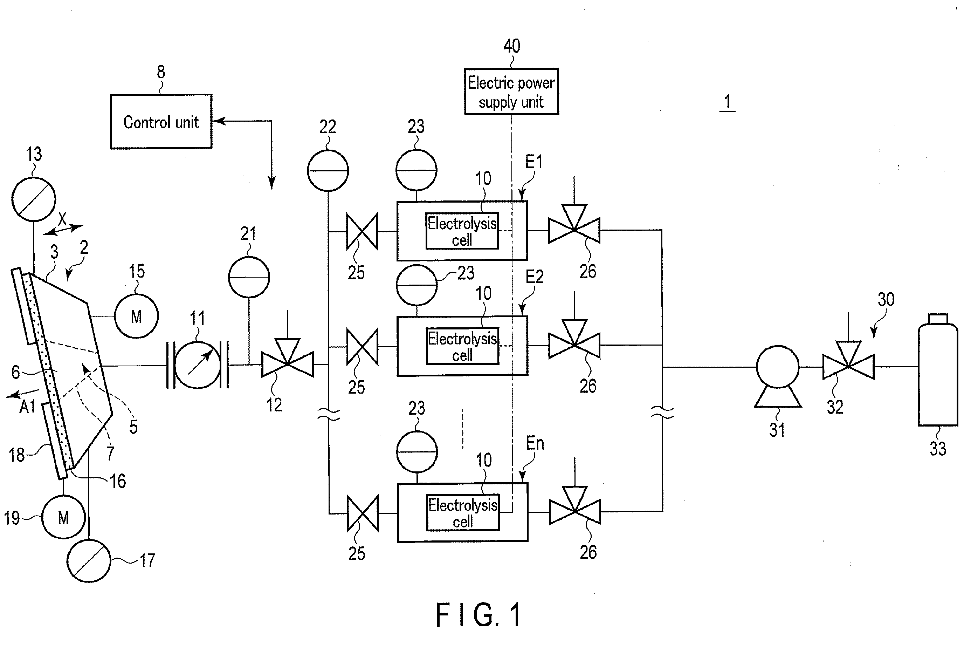

First, a first approach will be described as an example of the approaches. FIG. 1 shows a carbon dioxide capture system 1 according to the first approach. As shown in FIG. 1 and others, the carbon dioxide capture system 1 includes an intake unit 2. In the intake unit 2, a depth direction (a direction indicated by arrows X) is defined. The intake unit 2 is arranged in an environment in which a gas flow occurs (an environment in which a gas flow already exists), that is, an environment in which an environmental wind occurs. The intake unit 2 includes an exterior member 3. The intake unit 2 has a flow path 5 formed inside the exterior member 3. The flow path 5 is formed along the depth direction of the intake unit 2. The intake unit 2 also has an intake port 6. The flow path 5 opens at the intake port 6 to the outside of the intake unit 2, that is, to the environment in which the intake unit 2 is arranged. The intake unit 2 takes in a gas (outside air) from the intake port 6 using the flow of the gas (environmental wind) in the arrangement environment.

The gas taken in from the intake port 6 flows into the flow path 5. In a flow path including the flow path 5 through which the taken gas flows, the side approaching the intake port 6 is an upstream side, and the side away from the intake port 6 is a downstream side. In the flow path (flow channel) 5, the gas taken in from the intake port 6 flows from the upstream side to the downstream side. In the example of FIG. 1 and others, the flow path 5 of the intake unit 2 has a cross-sectional area decreased portion 7 in which the cross-sectional area of the flow path 5 decreases from the upstream side toward the downstream side. In the cross-sectional area decreased portion 7, the cross-sectional area of the flow path (flow channel) 5 decreases (grasually decreases) from the opening area at the intake port 6 with being away from the intake port 6.

In the present approach, the carbon dioxide capture system 1 includes an electrolysis unit. In the example of FIG. 1 and others, the carbon dioxide capture system 1 includes n (n is an integer of 2 or more) electrolysis units E1 to En. The electrolysis units E1 to En are arranged on the downstream side with respect to the intake unit 2 in the flow path through which the taken gas flows. The electrolysis units E1 to En are arranged in parallel with each other in the flow path through which the taken gas flows. In the present approach, one electrolysis cell 10 is provided in each of the electrolysis units E1 to En. The gas taken in from the intake port 6 of the intake unit 2 can flow into each of the electrolysis units E1 to En.

The carbon dioxide capture system 1 includes a control unit (controller) 8. The control unit 8 controls the entire carbon dioxide capture system 1. The control unit 8 includes a processor or an integrated circuit, and a storage medium (non-transitory storage medium) such as a memory. The processor or integrated circuit includes any of a central processing unit (CPU), an application specific integrated circuit (ASIC), a microcomputer, a field programmable gate array (FPGA), a digital signal processor (DSP), and the like. The control unit 8 may include only one processor or the like, or may include a plurality of processors or the like. The control unit 8 performs processing described later by a processor or the like. The processing of the control unit 8 described later may be performed by a virtual processor or the like in a cloud environment instead of the processor or the like.

In the flow path through which the gas taken in from the intake port 6 flows, an air flow meter (flow meter) 11 is arranged between the intake port 6 and the electrolysis units E1 to En. The air flow meter 11 measures the flow rate (air volume) of the gas taken in from the intake port 6. In the flow path through which the taken gas flows, a flow rate regulating valve (air volume regulating valve) 12 is arranged as a flow rate regulating unit (flow rate adjusting unit) between the air flow meter 11 and the electrolysis units E1 to En. The flow rate regulating valve 12 is arranged on the downstream side with respect to the intake port 6 and on the upstream side with respect to the electrolysis units E1 to En, and is arranged between the intake port 6 and the electrolysis units E1 to En. The flow rate regulating valve 12 regulates the flow rate of the gas flowing to the downstream side through the flow rate regulating valve 12. One flow rate regulating valve 12 may be arranged for each of the electrolysis units E1 to En, or one flow rate regulating valve 12 may be provided for two or more of the electrolysis units E1 to En. Therefore, the flow rates of a plurality of gases in the electrolysis units E1 to En may be regulated by one flow rate regulating valve 12.

The control unit 8 acquires, from the air flow meter 11, the measurement result of the flow rate of the gas taken in from the intake port 6. The control unit 8 controls the operation of the flow rate regulating valve 12 based on the measurement result (single or multiple mesurment results) from the air flow meter 11, and controls the flow rate of the gas flowing toward the downstream side through the flow rate regulating valve 12 so as not to exceed the reference flow rate (regulates the gas flow rate toward the downstream side so as not to exceed a standard value by adjusting). If the flow rate of the gas taken in from the intake port 6 exceeds the reference flow rate, the control unit 8 controls the operation of the flow rate regulating valve 12 to cause only a part of the taken gas at the reference flow rate to flow to the downstream side through the flow rate regulating valve 12. At this time, the remaining part of the taken gas that has not flowed into the downstream side through the flow rate regulating valve 12 is discharged to the atmosphere through the flow rate regulating valve 12. Since the flow rate of the gas flowing to the downstream side through the flow rate regulating valve 12 is adjusted so as not to exceed the reference flow rate, the inflow amount of the gas is adjusted in each of the electrolysis units E1 to En so as not to increase in excess of the appropriate range. This makes it possible to effectively prevent breakage or the like of the electrolysis units E1 to En.

The carbon dioxide capture system 1 includes an anemoscope 13 and a motor 15 that is a drive member. The anemoscope 13 measures the direction (gas flow direction) in which the gas flows (the direction in which the environmental wind flows) in the environment where the intake unit 2 is arranged. Therefore, the anemoscope 13 mesures the direction of ambient gas flow of the intake unit 2. The motor 15 is driven to cause the intake unit 2 to perform an operation such as rotation, so that the posture (position) of the intake unit 2 changes. As the posture of the intake unit 2 changes, the opening direction of the intake port 6 changes. The drive member such as the motor 15 is not necessarily provided as long as the posture of the intake unit 2 changes in accordance with the wind direction.

The control unit 8 acquires from the anemoscope 13 the measurement result (single or multiple measurement results) of the direction of the gas flow in the environment in which the intake unit 2 is arranged. The control unit 8 controls the driving of the motor 15 based on the measurement result from the anemoscope 13, and controls the posture of the intake unit 2. As a result, the opening direction of the intake port 6 is adjusted by the control unit 8 based on the measurement result from the anemoscope 13. In one example, in the environment in which the intake unit 2 is arranged, the posture of the intake unit 2 is adjusted and the opening direction of the intake port 6 is adjusted such that the gas flows from a direction orthogonal or substantially orthogonal to the opening surface of the intake port 6 toward the intake port 6.

The opening direction of the intake port 6 preferably forms a depression angle with respect to the horizontal plane. In this case, the opening direction of the intake port 6 is inclined vertically downward with respect to the horizontal plane, and the intake port 6 is arranged at an angle of depression with respect to the horizontal plane. In the state of FIG. 1, the opening direction of the intake port 6 forms a depression angle with respect to the horizontal plane, and the direction indicated by an arrow A1 is the opening direction of the intake port 6. In the example of FIG. 1, a filter 16 is attached to the exterior member 3 of the intake unit 2. The filter 16 is attached to the exterior member 3 so as to cover the intake port 6 from the outside. The horizontal plane is a virtual plane orthogonal to the vertical direction (gravity direction).

In the example of FIG. 1, the carbon dioxide capture system 1 includes a water level gauge 17, a shutter 18 as an opening/closing member, and a motor 19 as a drive member. The water level gauge 17 measures the water level in the environment where the intake unit 2 is arranged. Therefore, the water level gauge 17 measures ambient water level of the intake unit 2. The operating state of the shutter 18 is switched between the state in which the intake port 6 is opened and the state in which the intake port 6 is closed. In the carbon dioxide capture system 1, the operating state of the shutter 18 is changed by driving the motor 19, and the intake port 6 is switched between open and closed states by the shutter 18. Closing the intake port 6 by the shutter 18 prevents the flow of water or the like into the flow path 5 from the outside of the intake unit 2 from the intake port 6. In the carbon dioxide capture system 1, a plurality of drive members such as the motors 15 and 19 may be provided as in the example of FIG. 1. For example, a plurality of operating portions may be operated by one drive member, such as operating both the intake unit 2 and the shutter 18 by one motor (drive member).

The control unit 8 acquires from the water level gauge 17 the measurement result (single or multiple results) of the water level in the environment in which the intake unit 2 is arranged. The control unit 8 controls the driving of the motor 19 and the operation of the shutter 18 based on the measurement result from the water level gauge 17. As a result, the control unit 8 adjusts the open/closed state of the intake port 6 by the shutter 18 based on the measurement result from the water level gauge 17. If the water level in the environment in which the intake unit 2 is arranged does not exceed the reference level (referential level), the control unit 8 opens the intake port 6. Then, the control unit 8 closes the intake port 6 by the shutter 18 if the water level in the environment where the intake unit 2 is arranged exceeds the reference level. The reference level of the water level may be set in advance, or appropriate information may be acquired from a cloud or a network.

In the present approach, the taken gas is not heated or cooled between the intake port 6 and the electrolysis units E1 to En. That is, neither a mechanism for heating the taken gas nor a mechanism for cooling the taken gas are provided between the intake port 6 and the electrolysis units E1 to En in the flow path. Thus, the intake unit 2 allows the gas taken in through the intake port 6 to flow into any of the electrolysis units E1 to En without heating or cooling. In one example, the intake unit 2 allows the gas taken in from the intake port 6 to flow into any of the electrolysis units E1 to En at a temperature in the range from -10°C to 50°C.

The carbon dioxide capture system 1 includes thermometers 21 and 22. The thermometer (first thermometer) 21 measures the temperature of the gas taken in from the intake port 6 between the intake port 6 and the flow rate regulating valve 12. The thermometer (second thermometer) 22 measures the temperature of the gas flowing downstream from the flow rate regulating valve 12 between the flow rate regulating valve 12 and the electrolysis units E1 to En. The control unit 8 acquires the measurement results of the temperatures of the gas from the thermometers 21 and 22.

In one example, the control unit 8 controls the operation of the flow rate regulating valve 12 based on the measurement results from the thermometers 21 and 22. In the present approach, as described above, the taken gas is not heated or cooled between the intake port 6 and the electrolysis units E1 to En. Therefore, if the carbon dioxide capture system 1 is operating normally, the temperature measured by the thermometer 21 has no difference or almost no difference from the temperature measured by the thermometer 22. Therefore, if the absolute value of the difference between the temperatures measured by the thermometers 21 and 22 exceeds a reference value, the control unit 8 controls the operation of the flow rate regulating valve 12 to prevent the taken gas from flowing downstream from the flow rate regulating valve 12. At this time, for example, all the taken gas is discharged from the flow rate regulating valve 12 to the atmosphere. In one example, a prescribed range is set for temperatures measured by the thermometers 21 and 22. If any of the temperatures measured by the thermometers 21 and 22 is out of the prescribed range, the control unit 8 actuates the shutter 18 by driving the motor 19 to close the intake port 6 by the shutter 18. This prevents gas outside the prescribed range of the temperature from flowing into the electrolysis units E1 to En from the intake port 6, thereby effectively preventing freezing, deterioration, and the like of the electrolysis units E1 to En. The prescribed range of the temperature is the above-mentioned range of - 10°C to 50°C, for example.

The carbon dioxide capture system 1 is provided with the same numbers of pressure gauges 23, inflow switching valves 25, and discharge switching valves 26 as the number of the electrolysis units E1 to En. In the example of FIG. 1, the carbon dioxide capture system 1 is provided with n pressure gauges 23, n inflow switching valves 25, and n discharge switching valves 26. One pressure gauge 23, one inflow switching valve 25, and one discharge switching valve 26 are provided for each of the electrolysis units E1 to En. Each of the pressure gauges 23 measures the pressure of the corresponding one of the electrolysis units E1 to En. The control unit 8 acquires the measurement result of the pressure in each of the electrolysis units E1 to En, from the corresponding one of the pressure gauges 23.

Each of the inflow switching valves 25 is switchable between an open state and a closed state. Each of the inflow switching valves 25 is opened to flow the gas into the corresponding one of the electrolysis units E1 to En from the flow rate regulating valve 12, that is, from the upstream side. On the other hand, each of the inflow switching valves 25 is closed to block the inflow of the gas from the upstream side to the corresponding one of the electrolysis units E1 to En. The control unit 8 switches each of the inflow switching valves 25 to the open state or the closed state by controlling the operation of the inflow switching valve 25.

Each of the discharge switching valves 26 is switchable among an open state, a closed state, and a release state. Each of the discharge switching valves 26 is opened to discharge the gas from the corresponding one of the electrolysis units E1 to En to the downstream side. On the other hand, each of the discharge switching valves 26 is closed to block the discharge of the gas from the corresponding one of the electrolysis units E1 to En. Each of the discharge switching valves 26 enters the release state to discharge the gas from the corresponding one of the electrolysis units E1 to En to the atmosphere. However, in the release state of each of the discharge switching valves 26, no gas is emitted downstream from the corresponding one of the electrolysis units E1 to En. The control unit 8 switches each of the discharge switching valves 26 to the open state, the closed state, or the release state by controlling the operation of the discharge switching valve 26.

The carbon dioxide capture system 1 includes a capture unit 30 that captures (collects) carbon dioxide. In the flow path through which a gas flows, the capture unit 30 is arranged downstream of the electrolysis units E1 to En. Each of the electrolysis units E1 to En can discharge the gas to the capture unit 30 if the corresponding one of the discharge switching valves 26 is opened. The capture unit 30 includes a compressor 31, a switching valve 32, and a capture tank 33. In the flow path through which a gas flows, the compressor 31 is arranged upstream of the capture tank 33, and the switching valve 32 is arranged between the compressor 31 and the capture tank 33.

The compressor 31 is operated to compress a gas such as carbon dioxide, and the compressed gas is pumped. The control unit 8 controls the operation state of the compressor 31 to switch between operation and stop of the compressor 31. The switching valve 32 is switchable between an open state, a closed state, and a release state. The switching valve 32 is opened to flow the gas from the compressor 31 into the capture tank 33. On the other hand, the switching valve 32 is closed to block the flow of the gas from the compressor 31 into the capture tank 33. The switching valve 32 enters the release state to discharge the gas from the compressor 31 to the atmosphere. However, in the release state of the switching valve 32, the gas is not discharged from the compressor 31 to the capture tank 33. The control unit 8 switches the switching valve 32 to the open state, the closed state, or the release state by controlling the operation of the switching valve 32.

Compressed carbon dioxide is discharged from the compressor 31 into the capture tank 33 with the switching valve 32 in the open state, and the carbon dioxide is retained. As a result, the carbon dioxide is captured. In the example of FIG. 1 and the like, in the capture tank 33, the captured carbon dioxide is retained in the capture unit 30. However, it is not limited thereto. In one example, the carbon dioxide captured in the capture unit 30 is supplied to an apparatus, a system, or the like that uses the carbon dioxide.

The carbon dioxide capture system 1 includes an electric power supply unit (power supply unit) 40 such as a potentiostat. The electric power supply unit 40 is electrically connected to the respective electrolysis cells 10 of the electrolysis units E1 to En. The electric power supply unit 40 can apply a voltage to the respective electrolysis cell 10 of the electrolysis units E1 to En. The control unit 8 controls the driving of the electric power supply unit 40 to control the voltage application states in the respective electrolysis cells 10 of the electrolysis units E1 to En. FIG. 1 illustrates the electrical connection between the electric power supply unit 40 and the respective electrolysis cells 10 of the electrolysis units E1 to En by alternate long and short dash lines.

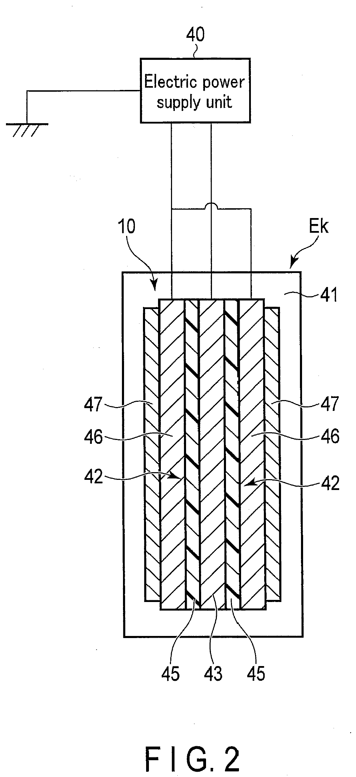

FIG. 2 illustrates an example of an electrolysis unit Ek, which is any one of the electrolysis units E1 to En. FIG. 2 illustrates, in addition to a configuration of the electrolysis unit Ek, an electrical connection structure and the like of the electrolysis unit Ek to the electric power supply unit 40. Note that k is any one of natural numbers of 1 or more and n or less. The electrolysis units other than the electrolysis unit Ek (other than Ek among E1 to En) also have the same configuration as the electrolysis unit Ek, and are electrically connected to the electric power supply unit 40 in the same manner as the electrolysis unit Ek.

In the example of FIG. 2, in the electrolysis unit Ek, the electrolysis cell 10 is arranged in a space to be a processing chamber 41. In the electrolysis unit Ek, the gas flows into the processing chamber 41 from the upstream side, and the gas is discharged from the processing chamber 41 to the downstream side or the atmosphere. In the electrolysis unit Ek, the pressure in the processing chamber 41 is measured as the pressure in the electrolysis unit Ek by the corresponding one of the pressure gauges 23. In the example of FIG. 2, the electrolysis cell 10 of the electrolysis unit Ek includes a working electrode 42 and a counter electrode 43. The electrolysis cell 10 is not provided with a reference electrode, and the electrolysis cell 10 includes two types of electrodes, the working electrode 42 and the counter electrode 43. In one example, a plurality of electric power supply units 40 may be provided, and the electrolysis units to which a voltage is applied may be different among the plurality of electric power supply units 40.

In the example of FIG. 2, the electrolysis cell 10 is formed by stacking two working electrodes 42 on one counter electrode 43. In the electrolysis cell 10, one of the two working electrodes 42 is stacked on the counter electrode 43 from one side in the stacking direction, and the other of the two working electrodes 42 is stacked on the counter electrode 43 from the other side in the stacking direction. In the electrolysis cell 10, a sheet-shaped separator 45 is arranged between each of the working electrodes 42 and the counter electrode 43. The separator 45 has electrical insulation properties, and electrically insulates each of the working electrodes 42 from the counter electrode 43. Each of the working electrodes 42 includes a current collector 46 and an adsorption layer 47 formed on the surface of the current collector 46. In the example of FIG. 2, the current collector 46 of each working electrode 42 has the adsorption layer 47 formed on a surface facing a side opposite to a side where the counter electrode 43 is located.

The electric power supply unit 40 is electrically connected to the current collectors 46 of the working electrodes 42 and the counter electrode 43. In the electric power supply unit 40, the application of a voltage to the electrolysis cell 10 generates a voltage (electric potential difference) between the working electrodes 42 and the counter electrode 43, so that a electric potential is added to the working electrodes 42. The counter electrode 43 is formed of a material having conductivity, for example, any of a carbon material, a conductive polymer, and platinum. The separator 45 may be formed of an organic material or may be formed of an inorganic material as long as it is formed of a material having electrical insulation properties. Examples of the material for forming the separator 45 include porous polyethylene, polypropylene, polyester, polyacrylonitrile, polyethylene terephthalate, polyvinylidene fluoride, polyimide, aramid, cellulose, ceramics, carbon, and a non-conductive metal. The separator 45 may be formed of only one type of the above-described materials, or may be formed by combining a plurality of types of the above-described materials.

The current collectors 46 of the working electrodes 42 are formed of a material having conductivity, for example, either a carbonaceous material or a metal. If the current collectors 46 are formed of a carbonaceous material, any one of glassy carbon, a graphite sheet, carbon felt, carbon cloth, carbon mesh, carbon paper, a carbon sheet with a gas diffusion layer, and the like is used for the current collectors 46. If the current collectors 46 are formed of a metal, any one of a copper plate, a copper sheet, a copper mesh, an aluminum plate, an aluminum sheet, an aluminum mesh, a nickel plate, a nickel sheet, a nickel mesh, and the like is used for the current collectors 46. The carbonaceous materials and the metals usable for forming the current collectors 46 are not limited to the above-described materials. The current collectors 46 preferably include a porous body with a large number of holes such as carbon cloth, carbon mesh, and metal mesh. As a result, the surface area of each current collector 46 increases, and the contact area between each current collector 46 and the corresponding adsorption layer 47 formed on the surface of the current collector 46 increases. As the contact area between each current collector 46 and the corresponding adsorption layer 47 increases, electric charges are likely to move from the current collector 46 to the adsorption layer 47.

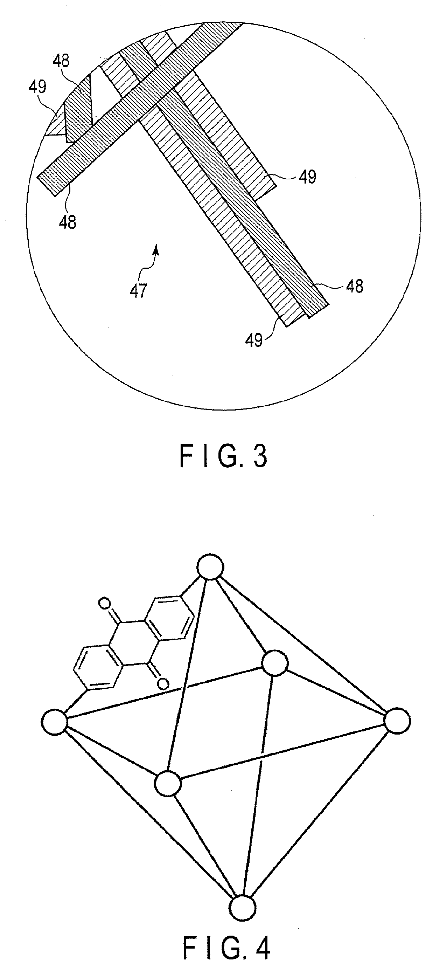

FIG. 3 is an enlarged view of a part of the adsorption layer 47 of the working electrode 42 in the electrolysis cell 10 of FIG. 2. As shown in FIG. 3 and the like, the adsorption layer 47 includes conductive members 48 and adsorption members 49. The adsorption layer 47 has a mixture of a large number of conductive members 48 and a large number of adsorption members 49. In the formation of the adsorption layer 47, the conductive members 48 and the adsorption members 49 are added to a solvent, and then the solvent is stirred to prepare a paste. At this time, in addition to the conductive members 48 and the adsorption members 49, a binder may be added to the solvent. Then, the adjusted paste is applied onto the surface of the current collector 46, and the applied paste is dried to form the adsorption layer 47.

The conductive members 48 are each formed of a conductive carbonaceous material, for example. In this case, the conductive members 48 are each formed of any of carbon nanotubes, graphite, graphene, carbon nanofibers, Ketjen black, and the like. The conductive members 48 are each preferably formed in a linear shape or a planar shape from the viewpoint of improving the contact probability with the current collectors 46 and the adsorption members 49. In this case, the conductive members 48 are each formed in any of a rod shape, a tube shape, a fiber shape, a sheet shape, and a flake shape, for example. The conductive member 48 may be formed of one kind of material, or may be formed by mixing a plurality of kinds of materials.

The adsorption members 49 each contain a compound having redox activity (redox-active compound). The adsorption members 49 are each formed of a porous body, and have a large number of pores with a diameter of 5 nm or less. In the present approach, the adsorption members 49 each includes at least one of metal-organic frameworks (MOF) and covalent-organic frameworks (COF). In each of the adsorption members 49, one or more crosslinking moieties are formed in the MOF and/or the COF, and the MOF and/or the COF contains molecules of the above-described compound having a redox activity as the crosslinking moieties. Example of the compound having redox activity includes at least one selected from the group consisting of a carbonyl compound, a pyridyl compound, and an imide compound. Examples of the carbonyl compound having redox activity includes benzoquinone, naphthoquinone, anthraquinone, phenanthrenequinone, and the like, and the pyridyl compound having redox activity includes phenanthroline, pyridine, phenazine, pyrimidine, methylviologen, and the like. Examples of the imide compound having redox activity include benzodipyrrole, phthalimide, phthaldiimide, naphthaleneimide, and naphthalenediimide. Examples of derivatives of methyl viologen (also called 1,1'-dimethyl-4,4'-bipyridinium dichloride) include viologens such as 1,1'-dibenzyl-4,4'-bipyridinium dichloride (also called: benzylviologen), 1,1'-diphenyl-4,4'-bipyridinium dichloride, 1,1'-bis (2,4-dinitrophenyl)-4,4'-bipyridinium dichloride, 1,1'-di-n-octyl-4,4'-bipyridinium dibromide, and 1,1'-diheptyl-4,4'-bipyridinium dibromide.

If each of the adsorption members 49 contains an MOF, the MOF contains a plurality of clusters as a metal complex. In the MOF, the plurality of clusters is crosslinked by a crosslinking ligand that is a crosslinking moiety. In the MOF, each of the plurality of clusters to be a metal complex contains any one or more of zirconium, copper, and manganese as a central metal. The MOF contains molecules of any of the above-described compounds having redox activity as a crosslinking ligand. Examples of the MOF included in the adsorption members 49 include an MOF having a Universitet i Oslo (UiO) structure.

FIG. 4 illustrates an example of the MOF included in the adsorption member 49. In the example of FIG. 4, 2,6-Zr-AQ-MOF is shown as a kind of MOF having a UiO structure. As shown in FIG. 4 and the like, the 2,6-Zr-AQ-MOF includes six clusters having zirconium as a central metal. The 2,6-Zr-AQ-MOF includes molecules of anthraquinone, which is a kind of carbonyl compound, as crosslinking ligands formed at 12 positions. In FIG. 4, each of six white circles represents a Zr₆O₄ (OH) ₄ cluster having zirconium as a central metal, and one of the molecules of anthraquinone in the 12 crosslinking ligands is shown, and illustration of the remaining 11 molecules are omitted.

The 2,6-Zr-AQ-MOF is an example of MOF that can be included in the adsorption member 49, and any appropriate MOF other than 2,6-Zr-AQ-MOF may be included in the adsorption member 49. For example, a 1,4-Zr-AQ-MOF or the like may be included in the adsorption member 49 as an MOF having a UiO structure. In addition to the MOF having a UiO structure, the adsorption member 49 may include an MOF having a Cu (2,7-AQDC) structure, MOF having a Mn (2,7-AQDC) structure, MOF having an IRMOF structure, MOF having an analog structure of IRMOF-9, and the like.

If each of the adsorption members 49 contains a COF, the COF is formed by covalent bonding of a large number of organic molecules. In the COF, a two-dimensional structure or a three-dimensional structure is formed by covalent bonds of a large number of organic molecules. In the COF, the organic molecules are crosslinked by a crosslinking moiety. The COF includes, as a crosslinking moiety, a molecule of any of the foregoing compounds having redox activity. In one example, a COF forming a three-dimensional structure by Π-Π stacking is contained in the adsorption member 49. Examples of the COF that forms a three-dimensional structure by Π-Π stacking and can be contained in the adsorption member 49 include TpPa-COF, PA-COF, 4KT-Tp COF, 2KT-Tp COF, 1KT-Tp COF, DAAQ-TFP-COF, PI-COF-1, PI-COF-2, PI-COF-3, CS-COF, CTF-1, CTF-2, TAPB-PDA-COF, N₃-COF, COF-42, and derivatives thereof.

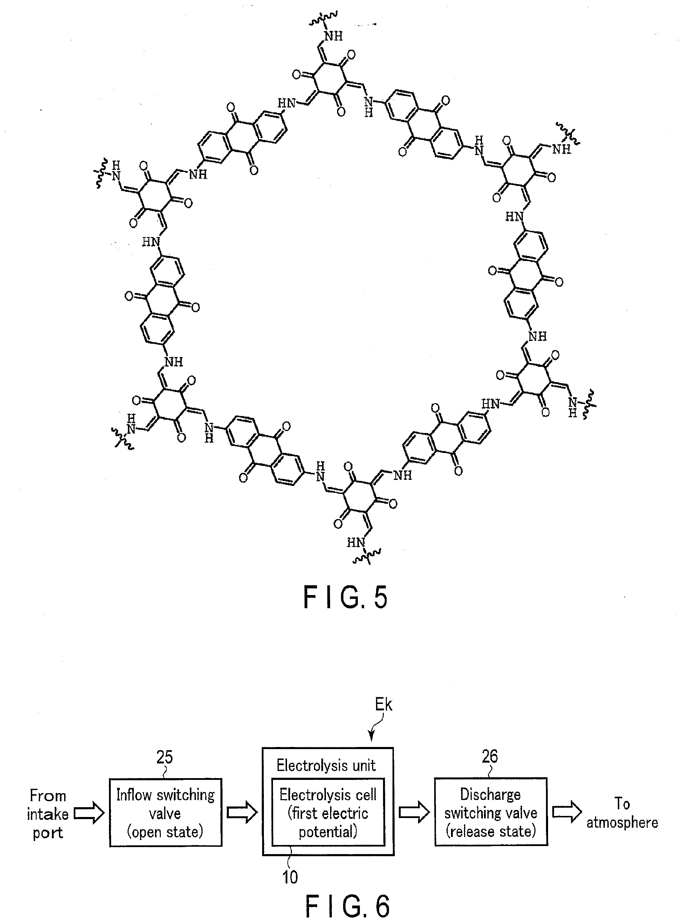

FIG. 5 illustrates an example of the COF included in the adsorption member 49. In the example of FIG. 5, DAAQ-TFP-COF is shown as one type of COF forming a three-dimensional structure by Π-Π stacking. As shown in FIG. 5 and others, the DAAQ-TFP-COF includes molecules of anthraquinone, which is a kind of carbonyl compound, are contained as crosslinking moieties that crosslink the organic molecules. The DAAQ-TFP-COF is an example of a COF that can be included in the adsorption member 49, and any appropriate COF other than the DAAQ-TFP-COF can be included in the adsorption member 49 as described above.

The electrolysis cell 10 contains an electrolyte, and the electrolyte is held by the working electrodes 42, the counter electrode 43, the separator 45, and the like. The electrolyte may contain either an ion-bonding salt or an ion-conducting polymer. Examples of the ion-bonding salt that can be contained in the electrolyte include an alkali metal salt, an alkaline earth metal salt, a transition metal salt, an amphoteric metal salt, an ammonium salt, an imidazolium salt, a pyridinium salt, and a phosphonium salt. The ion-binding salt may exist as a solid or as a liquid. If an ionically binding salt is contained as a liquid in the electrolyte, the electrolyte is retained as an ionic liquid in the electrolysis cell 10. Examples of the ion conductive polymer that can be contained in the electrolyte include polyethylene oxide (PEO), polypropyl oxide (PPO), polyacrylonitrile (PAN), polyvinyl chloride (PVC), and ionic liquid polymer.

In one example of FIG. 2 and others, the electric power supply unit 40 is connected to a ground (GND). The electric power supply unit 40 applies an electric potential to each of the working electrodes 42 and the counter electrodes 43 in the respective electrolysis cells 10 of the electrolysis units E1 to En with reference to the GND. In one example, the electric power supply unit 40 is electrically connected to a conductive portion serving as a reference electric potential provided outside the electrolysis units E1 to En. In this case, the electric power supply unit 40 applies an electric potential to each of the working electrodes 42 and the counter electrode 43 in the respective electrolysis cells 10 of the electrolysis units E1 to En with reference to the reference electric potential. The electric power supply unit 40 applies a voltage to the respective electrolysis cell 10 of the electrolysis units E1 to En to add a predetermined electric potential higher than the GND or the reference electric potential to the counter electrodes 43.

In each of the electrolysis units E1 to En, since a voltage is applied to the electrolysis cell 10, an electric potential lower than the predetermined electric potential of the counter electrode 43 is applied to the working electrodes 42. The electric power supply unit 40 applies a voltage to the respective electrolysis cells 10 of the electrolysis units E1 to En such that the electric potential of the working electrodes 42 reaches either a first electric potential or a second electric potential higher than the first electric potential. Here, each of the first electric potential and the second electric potential is lower than the predetermined electric potential of the counter electrode 43. In one example, an Ag/Ag⁺ electrode provided outside the electrolysis units E1 to En is provided as the above-described conductive portion serving as the reference electric potential. Then, on condition that the second electric potential is higher than the first electric potential, the first electric potential is an electric potential in a range of -1.8 VvsAg/Ag⁺ to 0.5 VvsAg/Ag⁺, and the second electric potential is an electric potential in a range of -1.0 VvsAg/Ag⁺ to +1.5VvsAg/Ag⁺ or less.

In each of the electrolysis units E1 to En, the first electric potential is applied to the working electrodes 42 by applying a voltage to the electrolysis cell 10, so that the above-described compound having the redox activity contained in the adsorption members 49 of the working electrodes 42 is reduced. That is, in each of the adsorption members 49, the MOF and/or the COF contains molecules of the compound having redox activity as a crosslinking moiety, and the molecules of the compound having redox activity are reduced. The compound is brought into a reduced state by the electric response to the electric potential of the working electrodes 42, so that the adsorption members 49 adsorb carbon dioxide. The first electric potential here will also be referred to as "reduction electric potential".

In each of the electrolysis units E1 to En, the second electric potential higher than the first electric potential is applied to the working electrodes 42 by applying a voltage to the electrolysis cell 10, so that the compound contained in the adsorption members 49 of the working electrodes 42 is oxidized. If the molecules of the compound having redox activity are oxidized by the electric response to the electric potential of the working electrodes 42, the adsorption members 49 release the adsorbed carbon dioxide. The second electric potential here will also be referred to as "oxidation electric potential". As described above, in the respective electrolysis cell 10 of the electrolysis units E1 to En, the adsorption members 49 of the working electrodes 42 can adsorb and release carbon dioxide by the electric response to the electric potential of the working electrodes 42. Therefore, in the present approach, the adsorption members 49 function as an adsorbent capable of adsorbing and releasing carbon dioxide.

Next, a process of capturing carbon dioxide using the carbon dioxide capture system 1 will be described. The following description is provided as to a case where carbon dioxide is captured using the electrolysis unit Ek, which is any one of the electrolysis units E1 to En. Carbon dioxide is captured in the case of using an electrolysis unit other than the electrolysis unit Ek (other than Ek of E1 to En) in the same manner as in the case of using the electrolysis unit Ek. Referring to FIGS. 6 to 11 in the following description, the gas flows in the portions indicated by arrows alone, and the flow of the gas is blocked in the portions indicated by cross marks superimposed on the arrows.

FIG. 6 shows an example of a state in which carbon dioxide is adsorbed on the adsorption members 49 of the electrolysis cell 10 in any one electrolysis unit Ek. In the state of FIG. 6, the inflow switching valve 25 corresponding to the electrolysis unit Ek is opened. Therefore, the gas taken in from the intake port 6 flows into the electrolysis unit Ek through the corresponding inflow switching valve 25. In the state of FIG. 6 (reduction state), a voltage is applied to the electrolysis cell 10 of the electrolysis unit Ek by the electric power supply unit 40, and a first electric potential (reduction electric potential) is added to the working electrodes 42 of the electrolysis unit Ek. Therefore, the above-described compound contained in the adsorption members (adsorbents) 49 of the working electrode 42 is reduced. As a result, in the electrolysis unit Ek, carbon dioxide contained in the flowed gas is adsorbed by the adsorption members 49 of the electrolysis cell 10, and the carbon dioxide is separated from the inflow gas. In the state of FIG. 6, the discharge switching valve 26 corresponding to the electrolysis unit Ek enters the release state. Therefore, the remaining gas from which the carbon dioxide has been separated by adsorption to the adsorption members 49 is discharged to the atmosphere from the discharge switching valve 26. At this time, the remaining gas is not discharged to the capture unit 30.

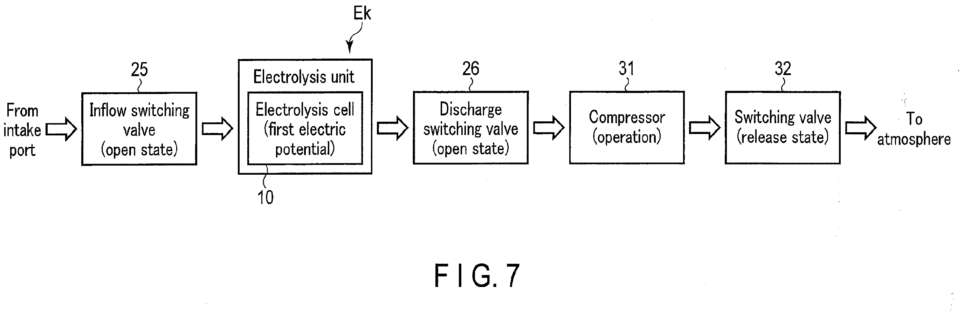

FIG. 7 shows an example, which is different from the example in FIG. 6, of a state in which carbon dioxide is adsorbed on the adsorption members 49 of the electrolysis cell 10 in any one electrolysis unit Ek. In the state of FIG. 7, as in the state of FIG. 6, the inflow switching valve 25 corresponding to the electrolysis unit Ek is opened, and the first electric potential is applied to the working electrodes 42 of the electrolysis cell 10 of the electrolysis unit Ek. However, in the state of FIG. 7, the discharge switching valve 26 corresponding to the electrolysis unit Ek is opened. Therefore, the residual gas from which the carbon dioxide has been separated by adsorption into the adsorption members 49 is discharged to the capture unit 30. In the state of FIG. 7, in the capture unit 30, the compressor 31 is operated, and the switching valve 32 enters the release state. Therefore, the remaining gas flowing into the compressor 31 is discharged from the switching valve 32 to the atmosphere through pumping by the compressor 31. FIG. 7 does not show the capture unit 30 is omitted, but shows the compressor 31 and the switching valve 32 constituting the capture unit 30.

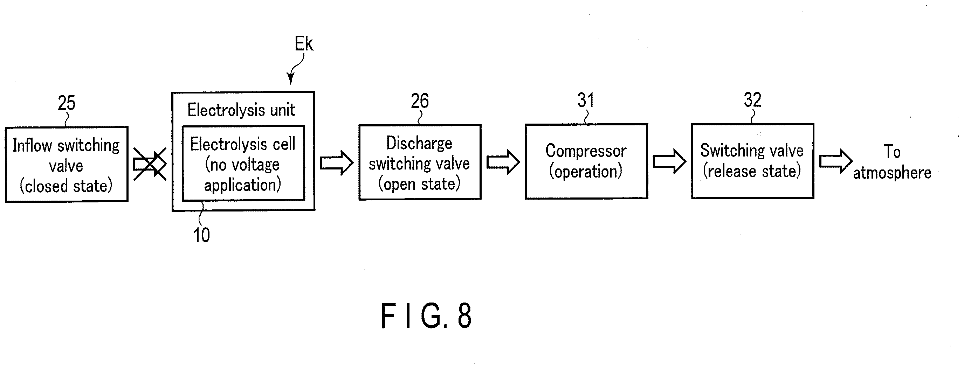

In the capture of carbon dioxide, if carbon dioxide is adsorbed on the adsorption members 49 in the state of FIG. 6 or the state of FIG. 7 for a certain period of time, excess gas other than the carbon dioxide is discharged from the electrolysis unit Ek. FIG. 8 shows an example of a state in which excess gas is discharged from any one electrolysis unit Ek after the state of FIG. 6 or the state of FIG. 7. In the state of FIG. 8, the inflow switching valve 25 corresponding to the electrolysis unit Ek is closed. Therefore, the taken gas and the like does not flow into the electrolysis unit Ek. In the state of FIG. 8, no voltage is applied to the electrolysis cell 10 of the electrolysis unit Ek. However, since the second electric potential is not applied to the electrolysis cell 10, the compound contained in the adsorption members 49 of the electrolysis cell 10 is not oxidized. Therefore, the carbon dioxide adsorbed on the adsorption members 49 in the state of FIG. 6 or the state of FIG. 7 is maintained in a state of being adsorbed on the adsorption members 49.

In the state of FIG. 8, the discharge switching valve 26 corresponding to the electrolysis unit Ek is opened. Then, in the capture unit 30, the compressor 31 is operated, and the switching valve 32 enters the release state. Therefore, the excess gas remaining in the processing chamber 41 of the electrolysis unit Ek is discharged from the electrolysis unit Ek to the capture unit 30 through the corresponding discharge switching valve 26 through pumping by the compressor 31. Then, the excess gas discharged to the capture unit 30 is discharged from the switching valve 32 to the atmosphere through pumping by the compressor 31. In the carbon dioxide capture system 1, in the electrolysis unit Ek, in parallel with the adsorption of carbon dioxide into the adsorption members 49 as described above, the adsorbed carbon dioxide may be released from the adsorption members 49 in any of the electrolysis units other than the electrolysis unit Ek (other than Ek of E1 to En) as described later.

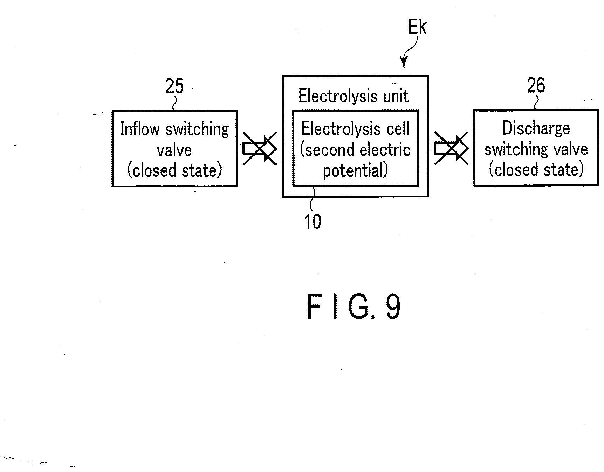

If the excess gas remaining in the electrolysis unit Ek is discharged in the state of FIG. 8, the carbon dioxide adsorbed on the adsorption members 49 of the electrolysis cell 10 is released in the electrolysis unit Ek. FIG. 9 shows an example of a state in which, after the state of FIG. 8, the carbon dioxide adsorbed on any one electrolysis unit Ek is released from the adsorption members 49 of the electrolysis cell 10. In the state of FIG. 9, the inflow switching valve 25 corresponding to the electrolysis unit Ek is closed, so that the taken gas does not flow into the electrolysis unit Ek.

In the state of FIG. 9 (oxidation state), a voltage is applied to the electrolysis cell 10 of the electrolysis unit Ek by the electric power supply unit 40, and the second electric potential (oxidation electric potential) is added to the working electrodes 42 of the electrolysis unit Ek. Therefore, the above-described compound contained in the adsorption members (adsorbents) 49 of the working electrode 42 is oxidized. As a result, in the electrolysis unit Ek, the carbon dioxide adsorbed on the adsorption members 49 in the state of FIG. 6 or the state of FIG. 7 is released from the adsorption members 49. In the state of FIG. 9, the discharge switching valve 26 corresponding to the electrolysis unit Ek is closed, so that the carbon dioxide released from the adsorption member 49 is not discharged from the electrolysis unit Ek. Therefore, the carbon dioxide released from the adsorption members 49 is accumulated in the processing chamber 41 of the electrolysis unit Ek.

If the carbon dioxide is released from the adsorption members 49 in the state of FIG. 9 for a certain period of time, the carbon dioxide released from the adsorption member 49 is discharged from the electrolysis unit Ek. In one example, in the state of FIG. 9 and the like, the carbon dioxide is released from the adsorption members 49 in a range of several seconds to 5 hours. Specifically, carbon dioxide is released from the adsorption member 49 in a range of ten seconds or more and five hours or less.

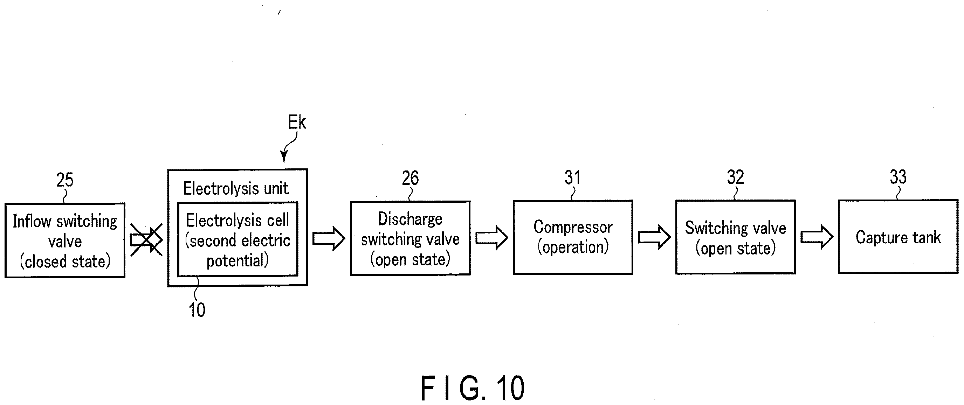

FIG. 10 shows an example of a state in which, after the state of FIG. 9, the carbon dioxide released from the adsorption members 49 is discharged from any one electrolysis unit Ek. In the state of FIG. 10, the inflow switching valve 25 corresponding to the electrolysis unit Ek is closed, so that the taken gas does not flow into the electrolysis unit Ek. Further, the second electric potential (oxidation electric potential) is applied to the working electrodes 42 of the electrolysis unit Ek by the electric power supply unit 40, so that the carbon dioxide released from the adsorption members 49 in the state of FIG. 9 is not adsorbed on the adsorption members 49.

In the state of FIG. 10, the discharge switching valve 26 corresponding to the electrolysis unit Ek is opened. Then, in the capture unit 30, the compressor 31 is operated, and the switching valve 32 is opened. Therefore, the carbon dioxide released from the adsorption members 49 in the electrolysis unit Ek is discharged from the electrolysis unit Ek to the capture unit 30 via the corresponding discharge switching valve 26 through pumping by the compressor 31. Then, the carbon dioxide discharged to the capture unit 30 flows into the capture tank 33 through pumping by the compressor 31. As a result, the carbon dioxide is retained in the capture tank 33, and the carbon dioxide is captured.

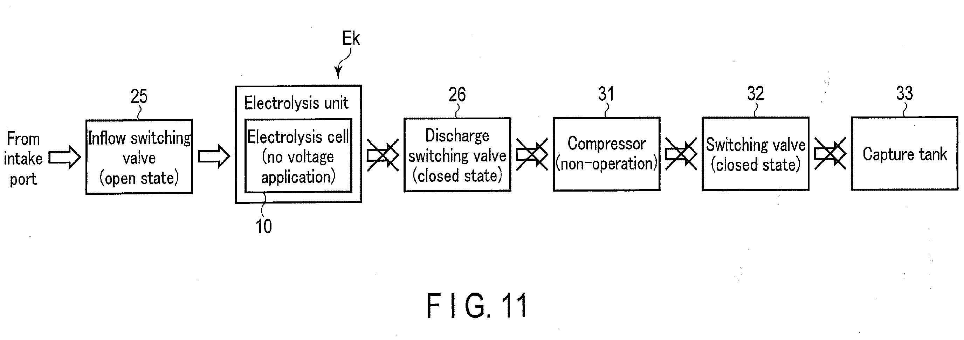

Upon completion of the capture of the carbon dioxide in the state of FIG. 10, the pressure of the electrolysis unit Ek is returned to the atmospheric pressure. FIG. 11 illustrates a state in which any one electrolysis unit Ek is returned to the atmospheric pressure after the state of FIG. 10. In the state of FIG. 11, the inflow switching valve 25 corresponding to the electrolysis unit Ek is opened, so that the taken gas flows into the electrolysis unit Ek. No voltage is applied to the electrolysis cell 10 of the electrolysis unit Ek. In the state of FIG. 11, the discharge switching valve 26 corresponding to the electrolysis unit Ek is closed, so that the gas is not discharged from the electrolysis unit Ek. Therefore, in the state of FIG. 11, the pressure of the electrolysis unit Ek increases from the state in which the pressure of the electrolysis unit Ek is reduced by the discharge of the carbon dioxide from the electrolysis unit Ek to the capture unit 30, and the electrolysis unit Ek returns to the atmospheric pressure. In the state of FIG. 11, the operation of the compressor 31 is stopped, and the switching valve 32 is closed.

If the electrolysis unit Ek is returned to the atmospheric pressure in the state of FIG. 11, the carbon dioxide capture system 1 enters the state of FIG. 6 or the state of FIG. 7. Then, in the state of FIG. 6 or the state of FIG. 7, the carbon dioxide is adsorbed on the adsorption members 49 of the electrolysis cell 10 in the electrolysis unit Ek as described above. Then, the above-described processing is repeatedly performed using the electrolysis unit Ek.

In the carbon dioxide capture system 1 of the present approach, the intake unit 2 takes in the gas from the intake port 6 using the flow of the gas in the environment in which the intake unit 2 is arranged, and flows the taken gas into the electrolysis units E1 to En. Therefore, the gas can be introduced into the electrolysis units E1 to En serving as the adsorption unit without providing a fan or the like. In each of the electrolysis units E1 to En, the electric potential of the working electrodes 42 is adjusted by the electric power supply unit 40, whereby the carbon dioxide contained in the gas having flowed in from the intake port 6 is adsorbed on the adsorption members 49 that is an adsorbent, and the carbon dioxide adsorbed on the adsorption members 49 is released from the adsorption members 49. Therefore, in each of the electrolysis units E1 to En, the adsorbed carbon dioxide can be released from the adsorption members 49 without heating the adsorption members 49 that are the adsorbent. Since neither fan for introducing a gas into the electrolysis units E1 to En nor mechanism for heating the adsorption members 49 are not provided, the configuration of the carbon dioxide capture system 1 is simplified.

In the carbon dioxide capture system 1, the gas taken in from the intake port 6 flows into the electrolysis units E1 to En without being heated or cooled. Therefore, no mechanism or the like for adjusting the temperature of the taken gas is provided between the intake port 6 and the electrolysis units E1 to En serving as the adsorption units. This further simplifies the configuration of the carbon dioxide capture system 1. Simplifying the configuration of the carbon dioxide capture system 1 allows downsizing of the carbon dioxide capture system 1. In addition, since the configuration of the carbon dioxide capture system 1 is simplified, the degree of freedom of the installation place of the carbon dioxide capture system 1 is increased.

In the carbon dioxide capture system 1, the control unit 8 controls the operation of the flow rate regulating valve 12, which is a flow rate regulating unit, based on the measurement result from the air flow meter 11, and controls the flow rate of the gas flowing toward the downstream side through the flow rate regulating valve 12 to a state where the flow rate does not exceed the reference flow rate. Therefore, a large amount of gas is effectively prevented from flowing into each of the electrolysis units E1 to En by the one or more flow rate regulating valves 12. Thus, in each of the electrolysis units E1 to En, the first electric potential is applied to the working electrodes 42, whereby the carbon dioxide contained in the flowed gas is appropriately adsorbed on the adsorption members 49.

In the carbon dioxide capture system 1, the control unit 8 controls the posture of the intake unit 2 based on the measurement result from the anemoscope 13, and adjusts the opening direction of the intake port 6. Therefore, the gas is more appropriately taken in from the intake port 6 by using the flow of the gas in the environment where the intake unit 2 is arranged. In addition, the cross-sectional area decreased portion 7 is formed in the flow path 5 of the intake unit 2. In the cross-sectional area decreased portion 7, the cross-sectional area of the flow path 5 decreases from the opening area at the intake port 6 with being awaye from the intake port 6. Therefore, the flow velocity of the gas taken in from the intake port 6 increases due to the passage through the cross-sectional area decreased portion, and the taken gas can appropriately reach each of the electrolysis units E1 to En.

In the carbon dioxide capture system 1, the opening direction of the intake port 6 forms a depression angle with respect to a horizontal plane. Therefore, it is possible to effectively prevent droplets of rain or the like from flowing into the electrolysis units E1 to En from the intake port 6 through the flow path 5. The control unit 8 controls the operation of the shutter 18, which is an opening/closing member, based on the measurement result from the water level gauge 17. If the water level measured by the water level gauge 17 exceeds the reference level, the control unit 8 closes the intake port 6 by the shutter 18. This further effectively prevents a liquid such as water from flowing into the electrolysis units E1 to En from the intake port 6 through the flow path 5. In the carbon dioxide capture system 1, the filter 16 is attached to the intake unit 2 in a state of covering the intake port 6. This effectively prevents dust and the like from flowing into the flow path 5 from the intake port 6.

### (Modification of First Approach)

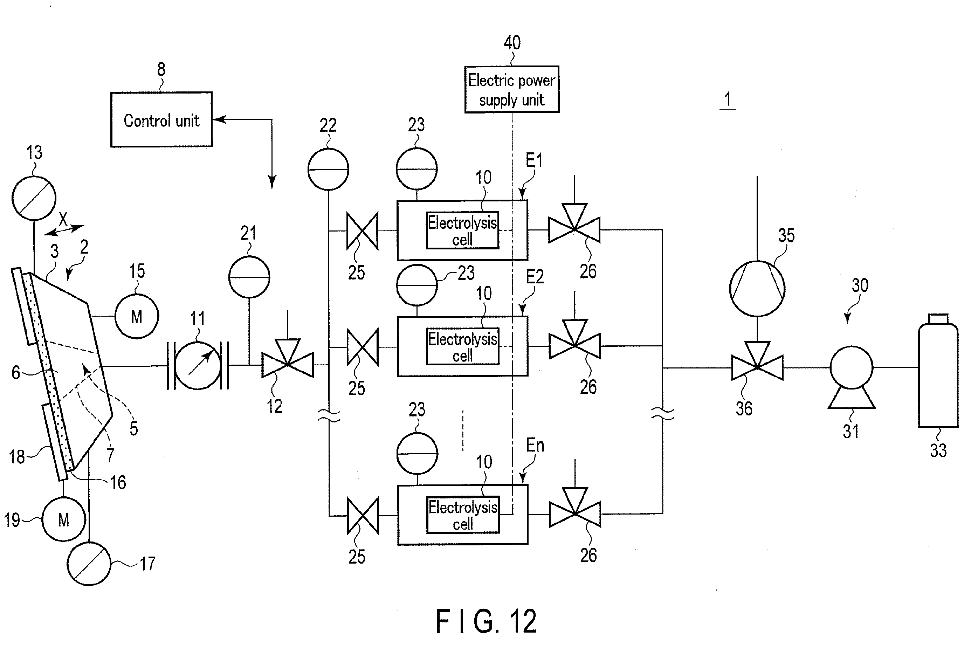

FIG. 12 shows a carbon dioxide capture system 1 according to a modification of the first approach. In the modification of FIG. 12, a configuration of a capture unit 30 is different from that of the first approach and the like. As shown in FIG. 12, also in the present modification, the capture unit 30 includes a compressor 31 and a capture tank 33. However, a switching valve 32 is not provided between the compressor 31 and the capture tank 33. The capture unit 30 includes a vacuum pump 35 and a switching valve 36. The switching valve 36 is arranged upstream of the compressor 31 in the flow path through which a gas flows. In the capture unit 30, in the switching valve 36, the flow path of the gas is branched into a flow path leading to the capture tank 33 through the compressor 31 and a flow path passing through the vacuum pump 35. Operating the vacuum pump 35 generates a flow of gas from the switching valve 36 toward the atmosphere through the vacuum pump 35. The control unit 8 controls the operating state of the vacuum pump 35, and switches between operation and stop of the vacuum pump 35.

In the present modification, the switching valve 36 is switchable among an open state, a closed state, and a release state. If the switching valve 36 is opened, the gas flows into the capture tank 33 through the compressor 31. On the other hand, the switching valve 36 is closed to block the inflow of the gas into each of the compressor 31 and the vacuum pump 35. If the switching valve 36 enters the release state, the gas can be discharged to the atmosphere through the vacuum pump 35. However, in the release state of the switching valve 36, the gas is not discharged to the compressor 31 and the capture tank 33. The control unit 8 switches the switching valve 36 to the open state, the closed state, or the release state by controlling the operation of the switching valve 36.

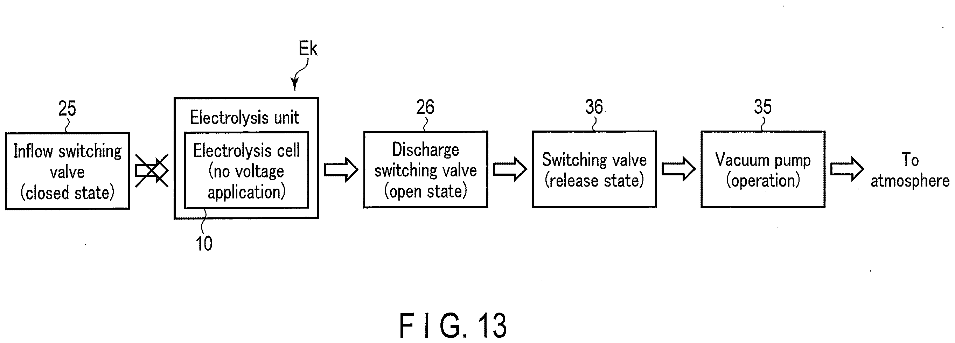

Hereinafter, a process of capturing carbon dioxide will be described. Referring to FIGS. 13 to 15 in the following description, the gas flows in the portions indicated by arrows alone, and the flow of the gas is blocked in the portions indicated by cross marks superimposed on the arrows. In the present modification, in the capture of carbon dioxide, the carbon dioxide capture system 1 is brought into the state of FIG. 6 described above, for example. As a result, in the electrolysis unit Ek, carbon dioxide contained in the flowed gas is adsorbed by the adsorption members 49 of the electrolysis cell 10, and the carbon dioxide is separated from the inflow gas. Then, in the present modification, if carbon dioxide is adsorbed on the adsorption members 49 for a certain period of time in the state of FIG. 6, the carbon dioxide capture system 1 is brought into the state of FIG. 13 instead of the state of FIG. 8, to discharge excess gas other than the carbon dioxide from the electrolysis unit Ek. FIG. 13 shows an example of a state in which the excess gas is discharged from any one electrolysis unit Ek after the state of FIG. 6.

In the state of FIG. 13, as in the state of FIG. 8, the inflow switching valve 25 corresponding to the electrolysis unit Ek is closed, so that no voltage is applied to the electrolysis cell 10 of the electrolysis unit Ek. Then, the discharge switching valve 26 corresponding to the electrolysis unit Ek is opened. However, in the state of FIG. 13, in the capture unit 30, the vacuum pump 35 is operated, and the switching valve 36 enters the release state. Therefore, the excess gas remaining in the processing chamber 41 of the electrolysis unit Ek is discharged from the electrolysis unit Ek to the capture unit 30 through the corresponding discharge switching valve 26 through suctioning by the vacuum pump 35. The excess gas discharged to the capture unit 30 is then discharged to the atmosphere from the switching valve 36 through the vacuum pump 35 by suctioning by the vacuum pump 35. FIG. 13 does not show the processing chamber 41 of the electrolysis unit Ek.

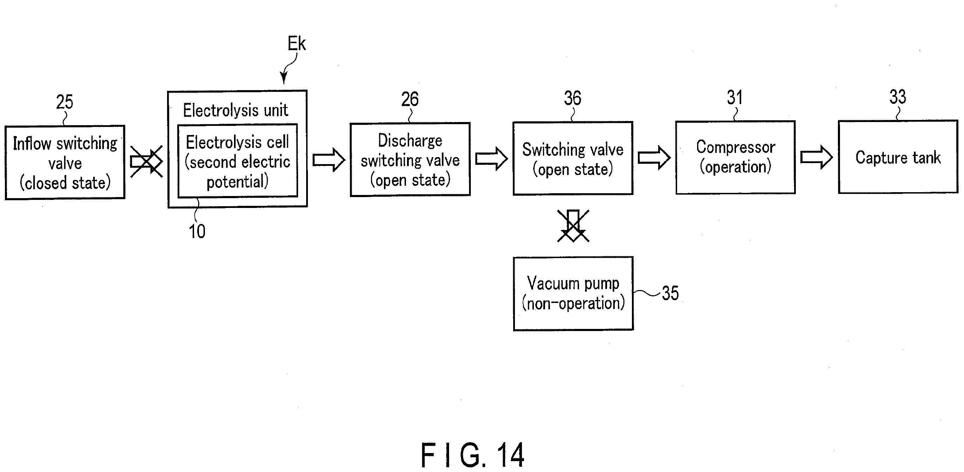

If the excess gas remaining in the electrolysis unit Ek is discharged in the state of FIG. 13, the carbon dioxide capture system 1 is brought into the state of FIG. 9 described above, for example. As a result, in the electrolysis unit Ek, the adsorption members 49 release the adsorbed carbon dioxide, and the carbon dioxide released from the adsorption members 49 is accumulated in the processing chamber 41. In the present modification, if the carbon dioxide is released from the adsorption members 49 in the state of FIG. 9 for a certain period of time, the carbon dioxide capture system 1 is brought into the state of FIG. 14 instead of the state of FIG. 10, and the carbon dioxide released from the adsorption members 49 is discharged from the electrolysis unit Ek. FIG. 14 shows an example of a state in which, after the state of FIG. 9, the carbon dioxide released from the adsorption members 49 is discharged from any one electrolysis unit Ek.

In the state of FIG. 14, as in the state of FIG. 10, the inflow switching valve 25 corresponding to the electrolysis unit Ek is closed, and the electric power supply unit 40 applies the second electric potential (oxidation electric potential) to the working electrodes 42. Then, the discharge switching valve 26 corresponding to the electrolysis unit Ek is opened, and the compressor 31 is operated in the capture unit 30. In the state of FIG. 14, the switching valve 36 is opened. Therefore, the carbon dioxide released from the adsorption members 49 in the electrolysis unit Ek is discharged from the electrolysis unit Ek to the compressor 31 of the capture unit 30 through the corresponding discharge switching valve 26 and switching valve 36, through pumping by the compressor 31. Then, the carbon dioxide discharged to the compressor 31 flows into the capture tank 33 through pumping by the compressor 31. As a result, the carbon dioxide is retained in the capture tank 33, and the carbon dioxide is captured. In the state of FIG. 14, the operation of the vacuum pump 35 is stopped, so that the carbon dioxide is not discharged to the atmosphere through the vacuum pump 35.

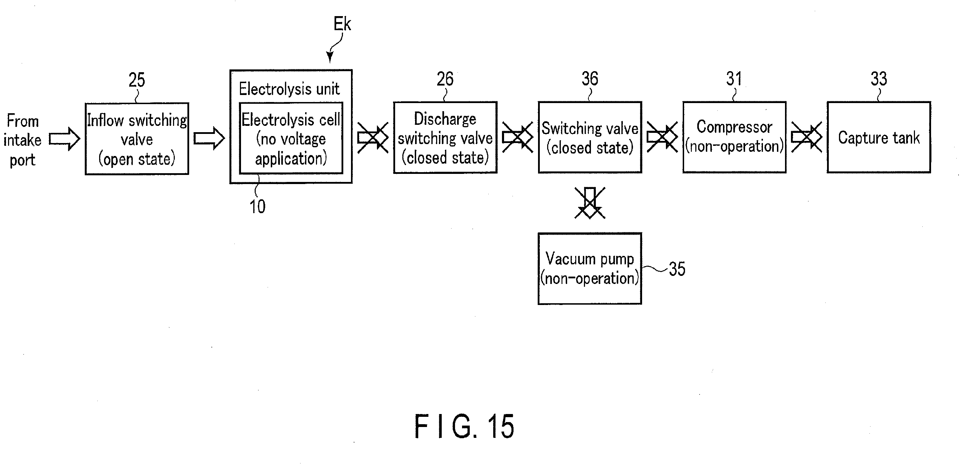

Upon completion of the capture of the carbon dioxide in the state of FIG. 14, the pressure of the electrolysis unit Ek is returned to the atmospheric pressure. FIG. 15 illustrates an example of a state in which any one electrolysis unit Ek is returned to the atmospheric pressure after the state of FIG. 14. In the state of FIG. 15, as in the state of FIG. 11, the inflow switching valve 25 corresponding to the electrolysis unit Ek is opened, so that no voltage is applied to the electrolysis cell 10 of the electrolysis unit Ek. Then, the discharge switching valve 26 corresponding to the electrolysis unit Ek is closed. Therefore, in the state of FIG. 15, as in the state of FIG. 11, the electrolysis unit Ek returns to the atmospheric pressure. In the state of FIG. 15, in the capture unit 30, the operations of the compressor 31 and vacuum pump 35 are stopped, and the switching valve 36 is closed.

If the electrolysis unit Ek is returned to the atmospheric pressure in the state of FIG. 15, the carbon dioxide capture system 1 is brought into the state of FIG. 6. Then, in the state of FIG. 6, the carbon dioxide is adsorbed on the adsorption member 49 of the electrolysis cell 10 in the electrolysis unit Ek as described above. Then, the above-described processing is repeatedly performed using the electrolysis unit Ek. The present modification also achieves the same operations and advantageous effects as those of the first approach and others. Therefore, also in the present modification, the configuration of the carbon dioxide capture system 1 is simplified.

### (Second Approach)

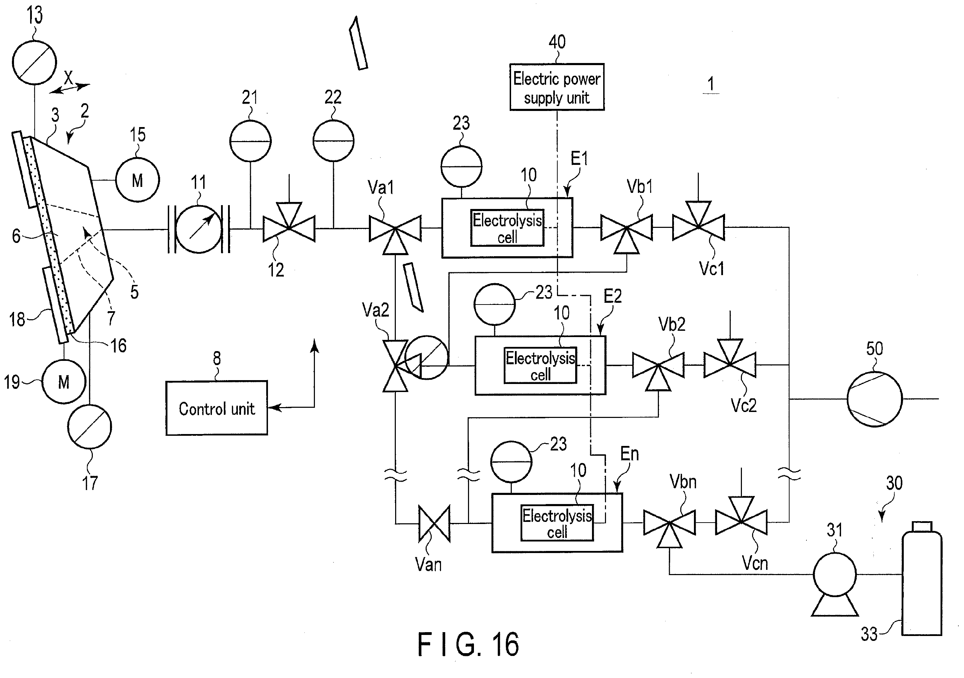

Next, a second approach will be described as a modification of the first approach. FIG. 16 shows a carbon dioxide capture system 1 according to the second approach. As shown in FIG. 16 and others, in the present approach, n electrolysis units E1 to En are arranged in series with each other in the flow path through which the taken gas flows. In the flow path, the electrolysis units E1 to En are arranged in order of E1, E2,..., and En from the upstream side. Also in the present approach, one pressure gauge 23 is provided for each of the electrolysis units E1 to En. In the present approach, the same number of inflow switching valves Va, discharge switching valves Vb, and release valves Vc as the electrolysis units E1 to En are provided. One inflow switching valve Va, one discharge switching valve Vb, and one release valve Vc are provided for each of the electrolysis units E1 to En.

As described above, k is any one of natural numbers of 1 or more and n or less. One of the inflow switching valves Va, one of the discharge switching valves Vb, and one of the release valves Vc corresponding to the electrolysis unit Ek will be referred to as Vak, Vbk, and Vck, respectively. Even if the electrolysis unit Ek is any one of the electrolysis units E1 to En, the configurations, operations, and the like of the electrolysis unit Ek, inflow switching valve Vak, discharge switching valve Vbk, and release valve Vck are as described below. In addition, j is any one of natural numbers of 1 or more and n-1 or less. One of the inflow switching valves Va, one of the discharge switching valves Vb, and one of the release valves Vc corresponding to the electrolysis unit Ej will be referred to as Vaj, Vbj, and Vcj, respectively. Even if the electrolysis unit Ej is any one of the electrolysis units E1 to En-1, the configurations, operations, and the like of the electrolysis unit Ej, inflow switching valve Vaj, discharge switching valve Vbj, and release valve Vcj are as described below.

In the present approach, in the inflow switching valve Vaj, the flow path of the gas is branched into a flow path to the electrolysis unit Ej and a flow path to the inflow switching valve Vaj+1. The inflow switching valve Vaj can be switched between an open state, a closed state, and a bypass state. The inflow switching valve Vaj is opened to allow the taken gas to flow into the electrolysis unit Ej. On the other hand, the inflow switching valve Vaj is closed to block the inflow of the taken gas into the electrolysis unit Ej. At this time, the flow of gas from the inflow switching valve Vaj to the inflow switching valve Vaj+1 is also blocked. The inflow switching valve Vaj enters the bypass state to allow the gas to flow into the inflow switching valve Vaj+1. At this time, the gas does not flow into the electrolysis unit Ej.

The inflow switching valve Van is switchable between the open state and the closed state. The inflow switching valve Van is opened to allow the taken gas to flow into the electrolysis unit En. On the other hand, the inflow switching valve Van is closed to block the inflow of the taken gas into the electrolysis unit En. If the inflow switching valves Va1 to Vaj-1 are in the bypass state and the inflow switching valve Vaj is opened, the gas taken in from the intake port 6 flows into the electrolysis unit Ej without passing through the electrolysis units E1 to Ej-1. If the inflow switching valves Va1 to Van-1 are in the bypass state and the inflow switching valve Van is opened, the gas taken in from the intake port 6 flows into the electrolysis unit En without passing through the electrolysis units E1 to En-1. The control unit 8 controls the operations of the inflow switching valves Va1 to Van.

In the carbon dioxide capture system 1 of the present approach, a vacuum pump 50 is provided. In the discharge switching valve Vbj, the flow path of the gas is branched into a flow path to the electrolysis unit Ej+1 and a flow path to the vacuum pump 50 through the release valve Vcj. The discharge switching valve Vbj is switchable among an open state, a closed state, and a discharge state. If the discharge switching valve Vbj is opened, the gas flows from the electrolysis unit Ej into the electrolysis unit Ej+1. On the other hand, the discharge switching valve Vbj is closed to block the inflow of the gas into the electrolysis unit Ej+1. At this time, the flow of gas from the discharge switching valve Vbj to the release valve Vcj is also blocked. The discharge switching valve Vbj is brought into the discharge state to discharge the gas toward the release valve Vcj. At this time, the gas does not flow into the electrolysis unit Ej+1.

In the discharge switching valve Vbn, the flow path of the gas is branched into a flow path to a capture unit 30 and a flow path to the vacuum pump 50 through the release valve Vcn. The discharge switching valve Vbn is switchable among an open state, a closed state, and a discharge state. If the discharge switching valve Vbn is opened, the gas can be discharged from the electrolysis unit En to the capture unit 30. On the other hand, the discharge switching valve Vbn is closed to block the discharge of the gas from the electrolysis unit En to the capture unit 30. At this time, the flow of gas from.the discharge switching valve Vbn to the release valve Vcn is also blocked. If the discharge switching valve Vbn is brought into the discharge state to discharge the gas toward the release valve Vcn. At this time, the gas does not flow into the capture unit 30. The control unit 8 controls the operations of the discharge switching valves Vb1 to Vbn.

In the present approach, the capture unit 30 includes a compressor 31 and a capture tank 33, and is not provided with a switching valve or the like. The carbon dioxide discharged from the electrolysis unit En to the capture unit 30 is pumped by the compressor 31 to capture the carbon dioxide in the capture tank 33. In the carbon dioxide capture system 1, the vacuum pump 50 is operated to generate a flow of gas from the release valves Vc1 to Vcn to the atmosphere through the vacuum pump 50. The control unit 8 controls the operating state of the vacuum pump 50, and switches between the operation and stop of the vacuum pump 50.

The release valve Vck is switchable between a non-release state and a release state. If the release valve Vck enters the non-release state, the discharge switching valve Vbk and the vacuum pump 50 communicate with each other. As a result, gas can flow into the vacuum pump 50 from the discharge switching valve Vbk through the release valve Vck. If the release valve Vck enters the release state, the gas flowing in through the discharge switching valve Vbk can be discharged to the atmosphere. At this time, the gas does not flow into the vacuum pump 50 through the release valve Vck. The control unit 8 controls the operations of the release valves Vc1 to Vcn.

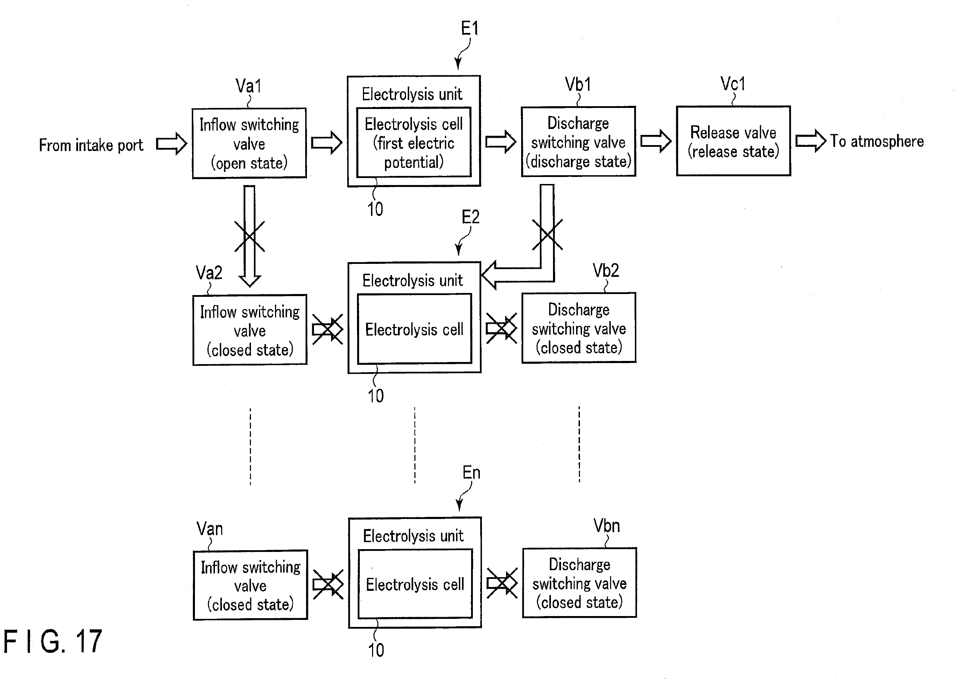

Hereinafter, a process of capturing carbon dioxide will be described. Referring to FIGS. 17 to 21 in the following description, the gas flows in the portions indicated by arrows alone, and the flow of the gas is blocked in the portions indicated by cross marks superimposed on the arrows. In the present approach, in the capture of carbon dioxide, the carbon dioxide is adsorbed on the adsorption members 49 of the electrolysis cell 10 in the electrolysis unit Ej, and then the carbon dioxide adsorbed on the electrolysis unit Ej is released from the adsorption members 49. Then, the carbon dioxide released from the adsorption member 49 is discharged from the electrolysis unit Ej to the electrolysis unit Ej+1, and the carbon dioxide discharged from the electrolysis unit Ej is adsorbed on the adsorption members 49 of the electrolysis cell 10 in the electrolysis unit Ej+1. In the most downstream electrolysis unit En, if the adsorbed carbon dioxide is released from the adsorption members 49 of the electrolysis cell 10, the carbon dioxide released from the adsorption members 49 is discharged to the capture unit 30. Then, the carbon dioxide is captured in the capture tank 33 of the capture unit 30.

FIG. 17 shows an example of a state in which the carbon dioxide is adsorbed on the adsorption members 49 of the electrolysis cell 10 in the most upstream electrolysis unit E1. In the state of FIG. 17, the inflow switching valve Va1 is opened, and the inflow switching valves Va2 to Van are closed. Therefore, the gas taken in from the intake port 6 flows only into the electrolysis unit E1 and does not flow into the electrolysis units E2 to En. In the state of FIG. 17, the electric power supply unit 40 applies a first electric potential (reduction electric potential) to the working electrodes 42 of the electrolysis unit E1. Therefore, in the electrolysis unit E1, the carbon dioxide contained in the flowed gas is adsorbed on the adsorption members 49 of the electrolysis cell 10, and the carbon dioxide is separated from the flowed gas. In the state of FIG. 17, the discharge switching valve Vb1 enters the discharge state, and the discharge switching valves Vb2 to Vbn are closed. Then, the release valve Vc1 enters the release state. Therefore, the residual gas from which the carbon dioxide is separated in the electrolysis unit E1 is discharged from the release valve Vc1 to the atmosphere and does not flow into the electrolysis unit E2.

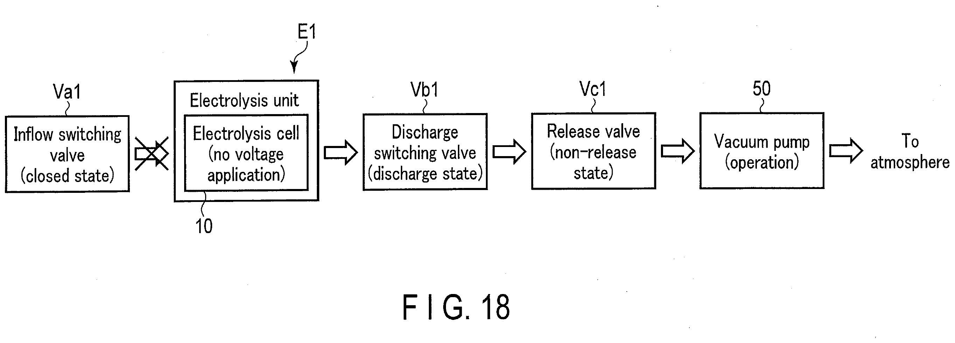

FIG. 18 shows an example of a state in which excess gas is discharged from the most upstream electrolysis unit E1 after the state of FIG. 17. In the present approach, in the state of FIG. 17, carbon dioxide is adsorbed on the adsorption member 49 of the electrolysis cell 10 in the electrolysis unit E1 for a certain period of time, and then, in the state of FIG. 18, the excess gas is discharged from the electrolysis unit E1. In the state of FIG. 18, the inflow switching valve Va1 is closed. Therefore, the taken gas or the like does not flow into the electrolysis unit E1. No voltage is applied to the electrolysis cell 10 of the electrolysis unit E1, and the carbon dioxide adsorbed on the state of FIG. 17 remains adsorbed on the adsorption members 49. In the state of FIG. 18, the discharge switching valve Vb1 enters the discharge state, and the release valve Vc1 enters the non-release state. Then, the vacuum pump 50 is operated. Therefore, the excess gas remaining in the electrolysis unit E1 is discharged to the vacuum pump 50 through the discharge switching valve Vb1 and the release valve Vc1. Then, the excess gas discharged to the vacuum pump 50 is then discharged from the vacuum pump 50 to the atmosphere.

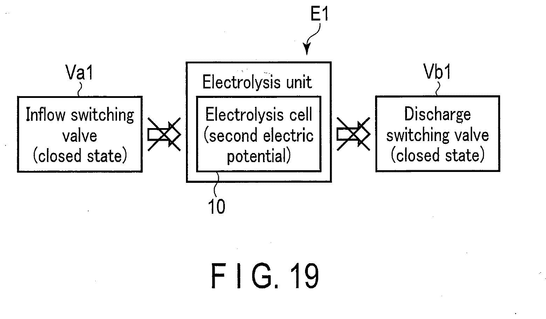

FIG. 19 shows an example of a state in which, after the state of FIG. 18, the carbon dioxide adsorbed on the most upstream electrolysis unit E1 is released from the adsorption members 49 of the electrolysis cell 10. In the present exemplary approach, after the excessive gas is discharged from the electrolysis unit E1 in the state of FIG. 18, the carbon dioxide is released from the adsorption members 49 in the electrolysis unit E1 in the state of FIG. 19. In the state of FIG. 19, since the inflow switching valve Va1 is closed, the gas does not flow into the electrolysis unit E1. Since the second electric potential (oxidation electric potential) is applied to the working electrodes 42 of the electrolysis unit E1 by the electric power supply unit 40, the carbon dioxide adsorbed on the electrolysis unit E1 is released from the adsorption members 49. In the state of FIG. 19, the discharge switching valve Vb1 is closed. Therefore, the carbon dioxide released from the adsorption members 49 is not discharged from the electrolysis unit E1 and stays in the electrolysis unit E1.

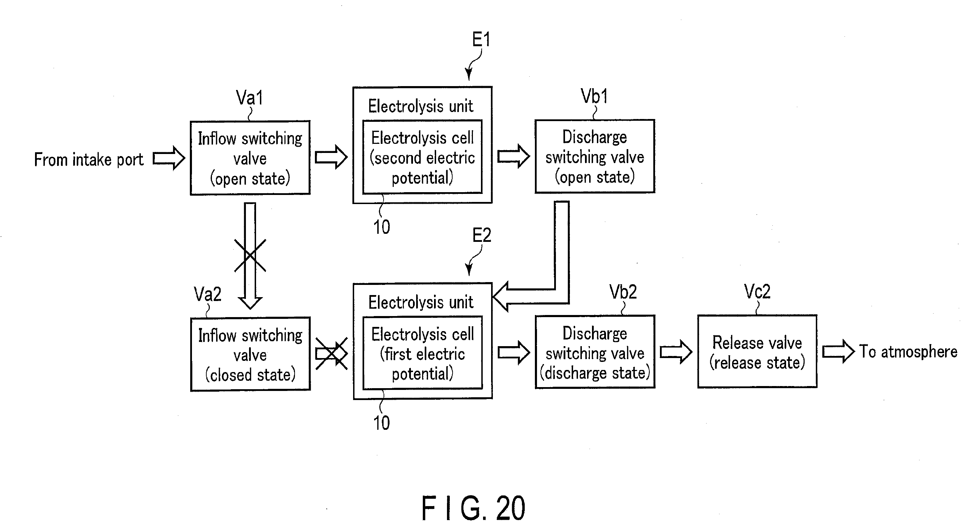

FIG. 20 shows an example of a state in which, after the state of FIG. 19, the carbon dioxide is flowed from the most upstream electrolysis unit E1 into the second most upstream electrolysis unit E2, and the carbon dioxide flowing in the second most upstream electrolysis unit E2 is adsorbed on the adsorption members 49 of the electrolysis cell 10. In the present approach, the carbon dioxide is released from the adsorption members 49 of the electrolysis unit E1 in the state of FIG. 19 for a certain period of time, and then, in the state of FIG. 20, the carbon dioxide is flowed from the electrolysis unit E1 into the electrolysis unit E2. In the state of FIG. 20, the inflow switching valve Va1 is opened, and the discharge switching valve Vb1 is opened. Therefore, a flow of gas into the electrolysis unit E2 from the intake port 6 through the electrolysis unit E1 is formed, and the gas taken in from the intake port 6 is used as a sweep gas for flowing the carbon dioxide from the electrolysis unit E1 into the electrolysis unit E2. At this time, the flow rate of the sweep gas flowing into the electrolysis units E1 and E2 is adjusted by the flow rate regulating valve 12 so as not to increase beyond an appropriate range. In the state of FIG. 20, since the inflow switching valve Va2 is closed, the gas does not flow into the electrolysis unit E2 without passing through the electrolysis unit E1.

In the state of FIG. 20, the second electric potential is applied to the working electrodes 42 of the electrolysis cell 10 in the electrolysis unit E1, and the first electric potential is applied to the working electrodes 42 of the electrolysis cell 10 in the electrolysis unit E2. Therefore, in the electrolysis unit E2, the carbon dioxide contained in the flowed gas is adsorbed on the adsorption members 49 of the electrolysis cell 10. As a result, the carbon dioxide is separated from the gas flowed in the electrolysis unit E2. In the state of FIG. 20, the discharge switching valve Vb2 enters the discharge state, and the release valve Vc2 enters the release state. Therefore, the residual gas from which the carbon dioxide is separated in the electrolysis unit E2 is discharged from the release valve Vc2 to the atmosphere and does not flow into the electrolysis unit E3.

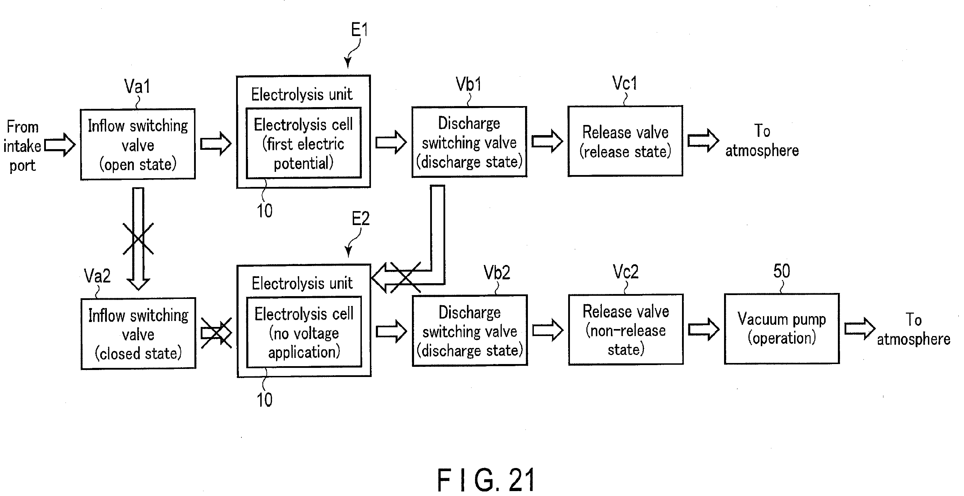

FIG. 21 shows an example of a state in which the excess gas is discharged from the second most upstream electrolysis unit E2 after the state of FIG. 20. In the present approach, in the state of FIG. 20, carbon dioxide is adsorbed on the adsorption members 49 of the electrolysis cell 10 in the electrolysis unit E2 for a certain period of time, and then, in the state of FIG. 21, the excess gas is discharged from the electrolysis unit E2. In the state of FIG. 21, the inflow switching valve Va2 is closed, and the discharge switching valve Vb1 enters the discharge state. Therefore, the gas does not flow into the electrolysis unit E2 from the intake port 6, and the gas does not flow into the electrolysis unit E2 from the electrolysis unit E1. No voltage is applied to the electrolysis cell 10 of the electrolysis unit E2, and the carbon dioxide adsorbed on the state of FIG. 20 remains adsorbed on the adsorption members 49. In the state of FIG. 21, the discharge switching valve Vb2 enters the discharge state, and the release valve Vc2 enters the non-release state. Then, the vacuum pump 50 is operated. Therefore, the excess gas remaining in the electrolysis unit E2 is discharged to the vacuum pump 50 through the discharge switching valve Vb2 and the release valve Vc2. Then, the excess gas discharged to the vacuum pump 50 is then discharged from the vacuum pump 50 to the atmosphere.

In the state of FIG. 21, the inflow switching valve Va1 is opened, and the gas flows into the electrolysis unit E1 from the intake port 6. Then, in the electrolysis unit E1, the reduction electric potential (first electric potential) is applied to the working electrodes 42 of the electrolysis cell 10, and the carbon dioxide contained in the flowed gas is adsorbed on the adsorption members 49 of the electrolysis cell 10. In the state of FIG. 21, the discharge switching valve Vb1 enters the discharge state as described above. Then, the release valve Vc1 enters the release state. Therefore, the residual gas from which the carbon dioxide is separated in the electrolysis unit E1 is discharged from the release valve Vc1 to the atmosphere and does not flow into the electrolysis unit E2.

If the excessive gas is discharged from the electrolysis unit E2 in the state of FIG. 21, the carbon dioxide is released from the adsorption member 49 in the electrolysis unit E2. At this time, the carbon dioxide is released from the adsorption member 49 in the electrolysis unit E2 similarly to the release of the carbon dioxide from the adsorption members 49 in the electrolysis unit E1. Then, the carbon dioxide is flowed from the electrolysis unit E2 into the electrolysis unit E3, and the flowed carbon dioxide is adsorbed on the adsorption members 49 of the electrolysis cell 10 in the electrolysis unit E3. At this time, the carbon dioxide is flowed from the electrolysis unit E2 into the electrolysis unit E3 in the same manner as the flow of the carbon dioxide from the electrolysis unit E1 into the electrolysis unit E2. However, in the inflow of the carbon dioxide from the electrolysis unit E2 to the electrolysis unit E3, the inflow switching valve Va1 is set to the bypass state, and the inflow switching valve Va2 is opened. Then, the discharge switching valve Vb2 is opened. As a result, a flow of gas into the electrolysis unit E3 from the intake port 6 through the electrolysis unit E2 is formed, and the gas taken in from the intake port 6 is used as a sweep gas for flowing the carbon dioxide to flow from the electrolysis unit E2 into the electrolysis unit E3. The sweep gas that flows the carbon dioxide from the electrolysis unit E2 into the electrolysis unit E3 does not pass through the electrolysis unit E1.

By performing the processing as described above, in the present approach, the carbon dioxide having been adsorbed on the adsorption members 49 and then released from the adsorption members 49 in the electrolysis unit E1 is adsorbed on the adsorption members 49 of the electrolysis cell 10 and released from the adsorption members 49 in the order of the electrolysis units E2,..., and En. Then, in the electrolysis unit En, the carbon dioxide released from the adsorption members 49 is discharged into the capture unit 30, and the carbon dioxide is captured in the capture unit 30. The present approach has the same configuration as the first approach and others except that the electrolysis units E1 to En are arranged in series with each other. Therefore, the present approach also has the same functions and advantageous effects as those of the first approach and others. Therefore, also in the present approach, the configuration of the carbon dioxide capture system 1 is simplified.

### (Third Approach)

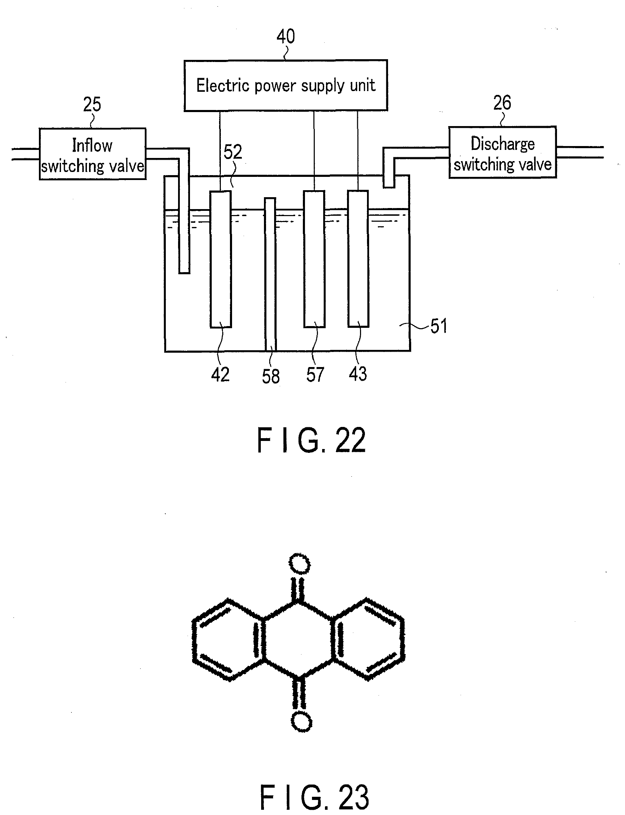

Next, a third approach will be described as a modification of the first approach. FIG. 22 shows any one electrolysis unit Ek provided in a carbon dioxide capture system 1 according to the third approach. In the present approach, the configuration of the electrolysis units E1 to En is different from that of the above-described approaches, and the configuration of the electrolysis cell 10 is different from that of the above-described approaches. In the following description, the electrolysis unit Ek will be mainly described, but the electrolysis units other than the electrolysis unit Ek (other than Ek of E1 to En) are similar in configuration to the electrolysis unit Ek. In the example of FIG. 22, as in the first approach and the like, one inflow switching valve 25 and one discharge switching valve 26 are provided in correspondence with the electrolysis unit Ek.

As shown in FIG. 22, in the present approach, the electrolysis cell 10 of the electrolysis unit Ek includes a working electrode 42 and a counter electrode 43 as in the above-described approaches. The counter electrode 43 is formed of the same material as in the above-described approaches. In the present approach, the working electrode 42 is formed of only a current collector 46, and does not have an adsorption layer 47. The current collector 46 of the working electrode 42 is formed in the same manner as in the above-described approaches. In the present approach, a separator (partition wall) 58 is provided in the electrolysis cell 10 instead of the separator 45. The separator 58 has an electrical insulation property, and is formed of the same material as the separator 45, for example. The electrolysis cell 10 includes a reference electrode 57, and the electric power supply unit 40 applies an electric potential to the working electrode 42 and the counter electrode 43 based on the electric potential (reference electric potential) of a reference electrode 57, and applies a voltage to the electrolysis cell 10. The reference electrode 57 is an Ag/Ag+ electrode, for example. The reference electrode 57 may not be provided in the electrolysis cell 10. In this case, an electric power supply unit 40 applies an electric potential to the working electrode 42 and the counter electrode 43 with reference to the ground (GND) or an electric potential (reference electric potential) of a conductive portion provided outside the electrolysis units E1 to En.

In the present approach, the electrolysis cell 10 contains an electrolytic solution 51 as an electrolyte. In the electrolytic solution, any one of the ion-bonding salt and the ion-conducting polymer described above is dissolved in an organic solvent or an aqueous solution. In the electrolysis cell 10, each of the working electrode 42, the counter electrode 43, and the reference electrode 57 is immersed in the electrolytic solution 51. In the present approach, in the electrolysis cell 10 of the electrolysis unit Ek, the gas flows into the liquid of the electrolytic solution 51 through the corresponding inflow switching valve 25. The electrolysis cell 10 has a head space 52 not filled with the electrolytic solution 51. In the electrolysis unit Ek, gas is discharged from the head space 52 of the electrolysis cell 10 through the corresponding discharge switching valve 26. In the electrolysis unit Ek, the pressure in the head space 52 is measured by a pressure gauge 23.

In the electrolysis cell 10 of the present approach, the separator 58 is arranged between the working electrode 42 and the counter electrode 43, and the electrolytic solution 51 is separated by the separator 58 into the working electrode 42 side and the counter electrode 43 side. If the reference electrode 57 is provided, the reference electrode 57 is immersed in the electrolytic solution 51 on the counter electrode 43 side.

In the present approach, the above-described compound having redox activity is dissolved and dispersed in the electrolytic solution 51. Therefore, the electrolytic solution 51 can contain the above-described compound having redox activity. In the electrolytic solution 51, the compound having redox activity is dispersed and dissolved in any form of molecules, ions, and the like. The compound having redox activity includes at least one selected from the group consisting of a carbonyl compound, a pyridyl compound, and an imide compound as in the above-described approaches. In the present approach, the compound contained in the electrolytic solution 51 functions as an adsorbent that is capable of adsorbing and releasing carbon dioxide. FIG. 23 shows an example of a compound having redox activity contained in an electrolytic solution in the electrolysis cell 10. In an example of FIG. 23, a molecule of anthraquinone is shown as a molecule of a compound having redox activity.

In the present approach, in each of the electrolysis units E1 to En, a first electric potential (reduction electric potential) is applied to the working electrode 42 by application of a voltage to the electrolysis cell 10, so that the compound as an adsorbent is reduced in the vicinity of the working electrode 42 in the electrolytic solution 51. If the compound is reduced by an electric response to the electric potential of the working electrode 42, the compound as an adsorbent adsorbs carbon dioxide in the vicinity of the working electrode in the electrolytic solution 51. In each of the electrolysis units E1 to En, a second electric potential (oxidation electric potential) is applied to the working electrode 42 by the application of a voltage to the electrolysis cell 10, so that the compound as an adsorbent is oxidized in the vicinity of the working electrode 42 in the electrolytic solution 51. Then, if the compound is oxidized by an electric response to the electric potential of the working electrode 42, the compound as an adsorbent can release the carbon dioxide in the vicinity of the working electrode in the electrolytic solution 51.

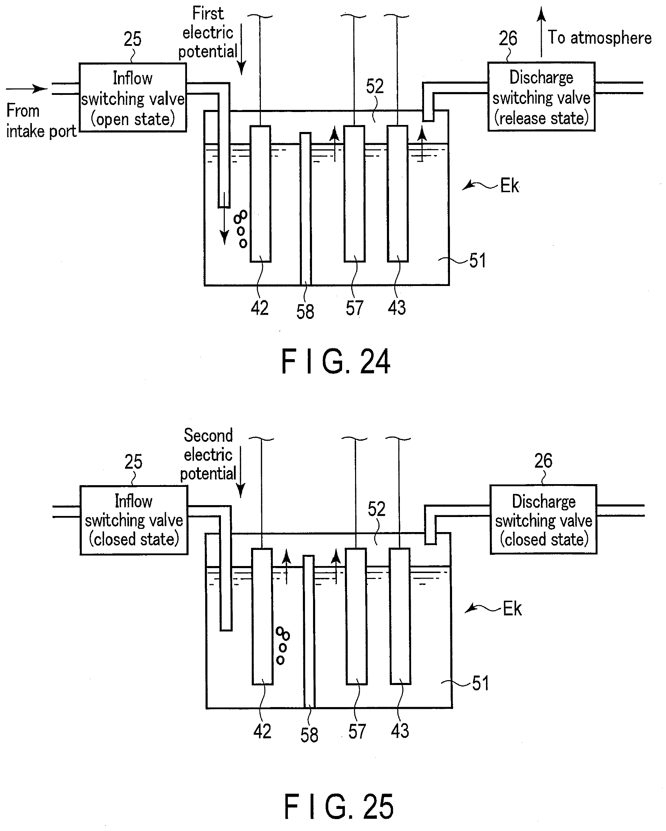

FIG. 24 shows a state in which carbon dioxide is adsorbed on the adsorbent (redox-active compound) contained in the electrolytic solution 51 of the electrolysis cell 10 in an any one electrolysis unit Ek. In the state of FIG. 24, the gas taken in at the intake port 6 flows into the electrolytic solution 51 of the electrolysis cell 10 in the electrolysis unit Ek through the corresponding inflow switching valve 25. The first electric potential is applied to the working electrode 42. Therefore, in the vicinity of the working electrode 42 in the electrolytic solution 51, the carbon dioxide contained in the flowed gas is adsorbed by the adsorbent contained in the electrolytic solution 51. For example, the carbon dioxide is adsorbed on the adsorbent contained in the electrolytic solution 51 on the working electrode 42 side with respect to the separator 58. Then, the residual gas from which the carbon dioxide is separated is discharged from the electrolytic solution 51 to the head space 52. In the state of FIG. 24, the corresponding discharge switching valve 26 is in the release state. Therefore, the residual gas from which the carbon dioxide is separated is discharged from the head space 52 to the atmosphere through the corresponding discharge switching valve 26.

In the state of FIG. 24, carbon dioxide is adsorbed on the adsorbent (redox-active compound) for a certain period of time, and then excess gas remaining in the head space 52 and the like is discharged from the electrolysis unit Ek as in the above-described approaches. At this time, as in the above-described approaches, excess gas is discharged from the electrolysis unit Ek using a vacuum pump, the compressor 31 of the capture unit 30, or the like. If the excessive gas is discharged from the electrolysis unit Ek, the carbon dioxide adsorbed on the adsorbent is released from the adsorbent in the electrolysis unit Ek.

FIG. 25 shows a state in which the adsorbed carbon dioxide is released from the adsorbent (redox-active compound) contained in the electrolytic solution 51 of the electrolysis cell 10 in any one electrolysis unit Ek. In the state of FIG. 25, the corresponding inflow switching valve 25 and the corresponding discharge switching valve 26 are closed. Therefore, the gas does not flow into the electrolysis unit Ek, and the gas is not discharged from the electrolysis unit Ek. The second electric potential is applied to the working electrode 42. Therefore, in the vicinity of the working electrode 42 in the electrolytic solution 51, the adsorbent contained in the electrolytic solution 51 releases the adsorbed carbon dioxide. For example, the adsorbent contained in the electrolytic solution 51 releases the carbon dioxide on the working electrode 42 side with respect to the separator 58. The carbon dioxide released from the adsorbent is discharged from the electrolytic solution 51 to the head space 52. Then, the carbon dioxide is retained in the head space 52.

In the state of FIG. 25, after the carbon dioxide is released from the adsorbent (redox-active compound) for a certain period of time, the carbon dioxide released from the adsorbent is discharged to the capture unit 30 through the discharge switching valve 26 as in the above-described approaches. At this time, the discharge switching valve 26 corresponding to the electrolysis unit Ek is opened. Then, the carbon dioxide is captured in the capture unit 30. In one example, instead of being discharged to the capture unit 30, the carbon dioxide may be flowed into the electrolysis unit Ek+1 located immediately downstream of the electrolysis unit Ek, as in the second approach and the like. The discharge of the carbon dioxide from the electrolysis unit Ek to the capture unit 30 and the inflow of the carbon dioxide from the electrolysis unit Ek to the electrolysis unit Ek+1 take place in the same manner as in any of the above-described approaches.

In the present approach, in the capture of carbon dioxide, the introduction of gas into each of the electrolysis units E1 to En and the discharge of gas from each of the electrolysis units E1 to En are controlled in the same manner as in any of the above-described approaches. The carbon dioxide is then captured by the capture unit 30 in the same manner as in any of the above-described approaches. The present approach has the same configuration as the first approach and others except for the configuration of the electrolysis cell 10 in each of the electrolysis units E1 to En. Therefore, the present approach also has the same functions and advantageous effects as those of the first approach and others. Therefore, also in the present approach, the configuration of the carbon dioxide capture system 1 is simplified.

### (Fourth Approach)

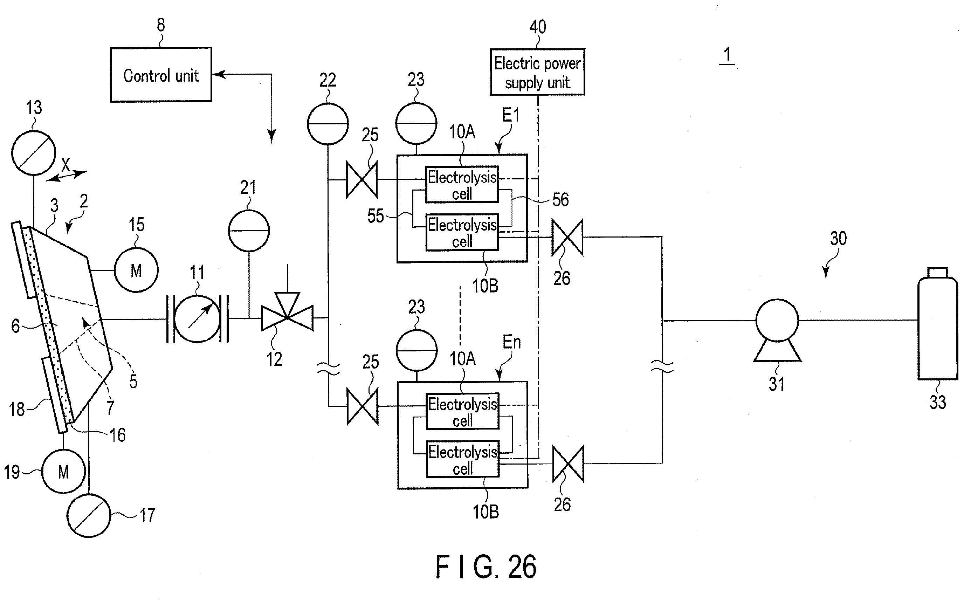

Next, a fourth approach will be described as a modification of the third approach. FIG. 26 shows a carbon dioxide capture system 1 according to the fourth approach. As shown in FIG. 26, in the present approach, each of the electrolysis units E1 to En includes two electrolysis cells 10A and 10B. Each of the electrolysis cells 10A and 10B has the same configuration as the electrolysis cell 10 of the third approach. Also in the present approach, one inflow switching valve 25 and one discharge switching valve 26 are provided for each of the electrolysis units E1 to En. However, in the present approach, the discharge switching valve 26 can be merely switched between the open state and the closed state, and is not switched to the release state. In the present approach, a capture unit 30 includes a compressor 31 and a capture tank 33. The capture unit 30 may be provided with a vacuum pump similar to the vacuum pump 35 and a switching valve similar to the switching valve 36. In this case, the vacuum pump is operated to discharge excess gas other than carbon dioxide from the electrolysis unit Ek to the atmosphere in the same manner as in the example shown in FIG. 12 and others.

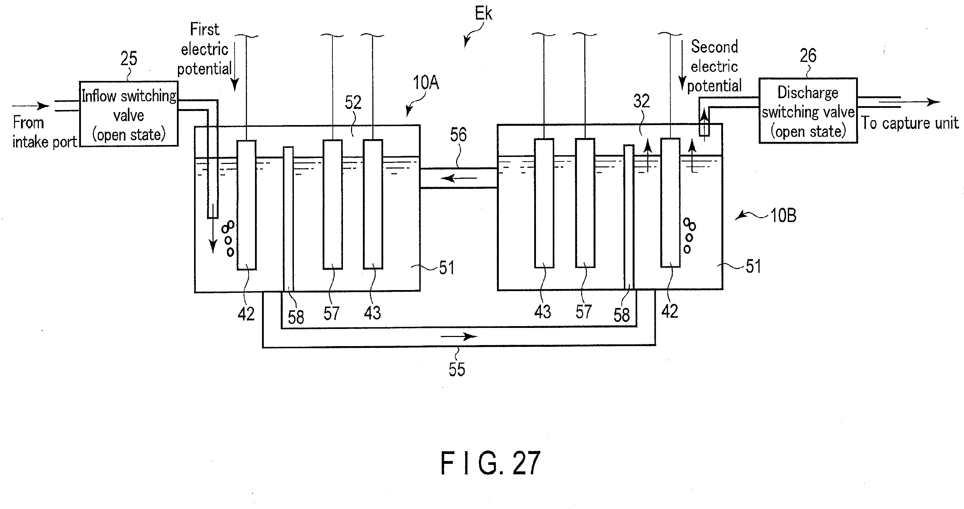

FIG. 27 shows any one electrolysis unit Ek provided in the carbon dioxide capture system 1. In the following description, the electrolysis unit Ek will be mainly described, but the electrolysis units other than the electrolysis unit Ek (other than Ek of E1 to En) are similar in configuration to the electrolysis unit Ek. As shown in FIG. 27 and others, in the electrolysis unit Ek, the gas or the like taken in from an intake port 6 flows into the electrolytic solution 51 of the electrolysis cell (first electrolysis cell) 10A through the corresponding inflow switching valve 25. In the electrolysis unit Ek, the gas is discharged from a head space 52 of the electrolysis cell (second electrolysis cell) 10B to the capture unit 30 through the corresponding discharge switching valve 26. In the present approach, in the electrolysis unit Ek, relay flow paths 55 and 56 connect the electrolysis cells 10A and 10B. In the relay flow path 55, the electrolytic solution flows from the electrolysis cell 10A toward the electrolysis cell 10B, and in the relay flow pathe 56, the electrolytic solution flows from the electrolysis cell 10B toward the electrolysis cell 10A. The relay flow path 55 connects a portion of the electrolytic solution 51 in the electrolysis cell 10A on the working electrode 42 side and a portion of the electrolytic solution 51 in the electrolysis cell 10B on the working electrode 42 side. The relay flow path 56 connects a portion of the electrolytic solution 51 in the electrolysis cell 10A on the counter electrode 43 side and a portion of the electrolytic solution 51 in the electrolysis cell 10B on the counter electrode 43 side.

In the present approach, in a state where carbon dioxide is captured using the electrolysis unit Ek, a first electric potential (reduction electric potential) is constantly added to the working electrode 42 of the electrolysis cell 10A, and a second electric potential (oxidation electric potential) is constantly added to the working electrode 42 of the electrolysis cell 10B. In a state where carbon dioxide is captured using the electrolysis unit Ek, the corresponding inflow switching valve 25 and the corresponding discharge switching valve 26 are opened. Then, in the electrolysis unit Ek, the gas taken in from the intake port 6 is flowed into the electrolytic solution 51 in the electrolysis cell (first electrolysis cell) 10A. In the electrolysis cell 10A, since the first electric potential (reduction electric potential) is applied to the working electrode 42, a compound as an adsorbent is reduced in the vicinity of the working electrode 42 in the electrolytic solution 51. If the compound is reduced by an electric response to the electric potential of the working electrode 42 of the electrolysis cell 10A, the compound as an adsorbent adsorbs the carbon dioxide in the vicinity of the working electrode 42 in the electrolytic solution 51 in the electrolysis cell 10A. For example, the carbon dioxide is adsorbed to the adsorbent contained in the electrolytic solution 51 in the electrolysis cell 10A on the working electrode 42 side with respect to the separator 58.

The adsorbent having adsorbed the carbon dioxide flows from the electrolysis cell 10A to the electrolysis cell 10B together with the electrolytic solution 51 through the relay flow path 55. In the electrolysis cell (second electrolysis cell) 10B, since the second electric potential (oxidation electric potential) is applied to the working electrode 42, a compound as an adsorbent is oxidized in the vicinity of the working electrode 42 in the electrolytic solution 51. If the compound is brought into an oxidized state by an electric response to the electric potential of the working electrode 42 of the electrolysis cell 10B, the compound as an adsorbent releases the adsorbed carbon dioxide in the vicinity of the working electrode 42 in the electrolytic solution 51 in the electrolysis cell 10B. For example, the adsorbent contained in the electrolytic solution 51 in the electrolysis cell 10B releases the carbon dioxide on the working electrode 42 side with respect to the separator 58. The carbon dioxide released from the adsorbent is discharged from the electrolytic solution 51 to the head space 52 in the electrolysis cell 10B. The carbon dioxide is then discharged from the head space 52 of the electrolysis cell 10B to the capture unit 30 through the corresponding discharge switching valve 26, and the carbon dioxide is captured in the capture unit 30. FIG. 27 does not show the capture unit 30. In one example, instead of being discharged to the capture unit 30, the carbon dioxide may be flowed into the electrolysis unit Ek+1 located immediately downstream of the electrolysis unit Ek, as in the second approach and the like.

The present approach has the same configuration as the third approach and others except that two electrolysis cells 10A and 10B are provided in each of electrolysis units E1 to En. Therefore, the present approach also has the same functions and advantageous effects as those of the third approach and others. Therefore, also in the present approach, the configuration of the carbon dioxide capture system 1 is simplified.

In at least one approach or example described above, the intake unit utilizes the gaseous flow around the intake unit to take in the gas through the intake port and flow the gas into the electrolysis unit. In the electrolysis unit, the electric potential is adjusted by the power supply unit, so as to adsorb carbon dioxide from the flowing gas to the adsorbent and release the carbon dioxide from the adsorbent. Accordingly, it is possible to provide a carbon dioxide capture system and a carbon dioxide capture method capable of realizing simplification of a system configuration.

The present disclosure also encompasses the following approaches of a carbon dioxide capture system and a carbon dioxide capture method:
1. A carbon dioxide capture system (1) comprising:
   an intake unit (2) which takes in gas through an intake port (6) by utilizing gaseous flow around the intake unit (2); and
   an electrolysis unit (E1-En) including an adsorbent which can adsorb and release carbon dioxide by an adjustment of an electric potential of the electrolysis unit (E1-En), the gas flowing from the intake port (6) into the electrolysis unit (E1-En);
   a power supply unit (40) which adjusts the electrical potential of the electrolysis unit (E1-En), so as to adsorb carbon dioxide from the flowing gas to the adsorbent and release carbon dioxide from the adsorbent in the electrolysis unit (E1-En); and
   a capture unit (30) which collects carbon dioxide released from the adsorbent after adsorption to the adsorbent.
2. The carbon dioxide capture system (1) of clause 1, further comprising:
   a flow meter (11) which measures a rate of gas flow at the intake port (6) of the intake unit (2);
   a flow rate adjusting unit (12) placed between the intake port (6) and the electrolysis unit (E1-En) and adjusting the gaseous flow rate toward a downstream side; and
   a control unit (8) which controls the flow rate of the adjusting unit (12), based on single or multiple measurement results of the flow meter (11), by regulating the gas flow rate toward the downstream side so as not to exceed a standard value.
3. The carbon dioxide capture system (1) of clause 1 or 2, further comprising:
   an anemoscope (13) which measures a direction of ambient gas flow of the intake unit (2); and
   a control unit (8) which controls a position of the intake unit (2) and adjusts an opening direction of the intake port (6) based on single or multiple measurement results of the anemoscope (13).
4. The carbon dioxide capture system (1) of any one of clauses 1 to 3, wherein
   the intake unit (2) further includes a flow channel (7) from the intake port (6) to the electrolysis unit (E1-En), and
   a cross-sectional area of the flow channel decreases (7) gradually away from the intake port (6).
5. The carbon dioxide capture system (1) of any one of clauses 1 to 4, wherein the intake port (6) is arranged at an angle of depression with respect to a horizontal plane in the intake unit (2).
6. The carbon dioxide capture system (1) of any one of clauses 1 to 5, further comprising:
   a water level gauge (17) which measures ambient water level of the intake unit (2);
   an opening/closing member (18) which switches an operating state of the intake port (6) between an open state and a close state; and
   a control unit (8) which controls an operation of the opening/closing member (18), based on sinlge or multiple measurement results of the water level gauge (17), so as to close the intake port (6) by the opening/closing member (18) in case of which the water level exceeds a referential level.
7. The carbon dioxide capture system (1) of any one of clauses 1 to 6, further comprising a filter (16) that is attached to the intake unit (2) and is able to cover the intake port (6).
8. The carbon dioxide capture system (1) of any one of clauses 1 to 7, wherein the gaseous flow can be flowed from the intake port (6) of the intake unit (2) into the electrolysis unit (E1-En) without heating or cooling.
9. The carbon dioxide capture system (1) of clause 8, wherein the gas can be flowed into the electrolysis unit (E1-En) at temperature in a range of -10°C to 50°C.
10. The carbon dioxide capture system (1) of any one of clauses 1 to 9, further comprising:
   a flow rate adjusting unit (12) which is located between the intake port (6) and the electrolysis unit (E1-En) and adjusts a gas flow rate flowing toward a downstream side; and
   a first thermometer (21) measuring temperature of the gas taken in from the intake port (6) between the intake port (6) and the flow rate adjusting unit (12); and
   a second thermometer (22) measuring the temperature of the gas flowing from the flow rate adjusting unit (12) toward the downstream side between the flow rate adjusting unit (12) and the electrolysis unit (E1-En).
11. The carbon dioxide capture system (1) of any one of clauses 1 to 10, wherein the adsorbent of the electrolysis unit (E1-En) includes one or several redox-active compounds.
12. The carbon dioxide capture system (1) of
   clause 11, wherein the adsorbent of the electrolysis unit (E1-En) adsorbs the carbon dioxide in a reduction state and releases the carbon dioxide in an oxidation state, by an electrical response to the electric potential.
13. The carbon dioxide capture system (1) of clause 11 or 12, wherein
   the adsorbent of the electrolysis unit (E1-En) further includes at least one of metal-organic frameworks and covalent-organic frameworks, and
   the metal-organic frameworks and/or the covalent-organic frameworks include a molecule of the redox-active compound as a crosslinking moiety.
14. The carbon dioxide capture system (1) of clause 11 or 12, wherein
   the electrolysis unit (E1-En) includes an electrolytic solution (51), and
   the electrolytic solution (51) includes the redox-active compound.
15. The carbon dioxide capture system (1) of any one of clauses 11 to 14, wherein the redox-active compound includes at least one of the groups of a carbonyl compound, a pyridyl compound, and an imide compound.
16. The carbon dioxide capture system (1) of any one of clauses 1 to 13, and 15, wherein
   the electrolysis unit (E1-En) includes a working electrode (42),
   the working electrode (42) includes a current collector (46) and an adsorption layer (47) formed on a surface of the current collector (46), and
   the adsorption layer (47) includes the adsorbent.
17. The carbon dioxide capture system (1) of any one of clauses 1 to 12, 14, and 15, wherein
   the electrolysis unit (E1-En) includes an electrolytic solution (51), and
   the electrolytic solution (51) includes the adsorbent.
18. The carbon dioxide capture system (1) of any one of clauses 1 to 17, wherein
   the electrolysis unit (E1-En) includes a working electrode (42),
   the working electrode (42) includes a current collector (46), and
   the current collector (46) includes a porous body.
19. A carbon dioxide capture method, comprising:
   taking in gas from an intake port (6) of an intake unit (2) by utilizing gas flow in an environment in which the intake unit (2) is located;
   flowing the gas taken in from the intake port (6) of the intake unit (2) into an electrolysis unit (E1-En) in which an adsorbent is capable of adsorbing and releasing carbon dioxide by an electric response to an electric potential;
   adjusting the electric potential to cause carbon dioxide contained in the gas flowing in from the intake port (6) to be adsorbed to the adsorbent and cause the carbon dioxide adsorbed on the adsorbent to be released from the adsorbent in the electrolysis unit (E1-En); and
   capturing the carbon dioxide released from the adsorbent after adsorption to the adsorbent.

While certain approaches have been described, these approaches have been presented by way of example only, and are not intended to limit the scope of the inventions. Indeed, the novel approaches described herein may be embodied in a variety of other forms; furthermore, various omissions, substitutions and changes in the form of the approaches described herein may be made without departing from the spirit of the inventions. The accompanying claims and their equivalents are intended to cover such forms or modifications as would fall within the scope and spirit of the inventions.

## Claims

1. A carbon dioxide capture system (1) comprising:
an intake unit (2) which takes in gas through an intake port (6) by utilizing gaseous flow around the intake unit (2); and
an electrolysis unit (E1-En) including an adsorbent which can adsorb and release carbon dioxide by an adjustment of an electric potential of the electrolysis unit (E1-En), the gas flowing from the intake port (6) into the electrolysis unit (E1-En);
a power supply unit (40) which adjusts the electrical potential of the electrolysis unit (E1-En), so as to adsorb carbon dioxide from the flowing gas to the adsorbent and release carbon dioxide from the adsorbent in the electrolysis unit (E1-En); and
a capture unit (30) which collects carbon dioxide released from the adsorbent after adsorption to the adsorbent.

2. The carbon dioxide capture system (1) of claim 1, further comprising:
a flow meter (11) which measures a rate of gas flow at the intake port (6) of the intake unit (2);
a flow rate adjusting unit (12) placed between the intake port (6) and the electrolysis unit (E1-En) and adjusting the gaseous flow rate toward a downstream side; and
a control unit (8) which controls the flow rate of the adjusting unit (12), based on single or multiple measurement results of the flow meter (11), by regulating the gas flow rate toward the downstream side so as not to exceed a standard value.

3. The carbon dioxide capture system (1) of claim 1 or 2, further comprising:
an anemoscope (13) which measures a direction of ambient gas flow of the intake unit (2); and
a control unit (8) which controls a position of the intake unit (2) and adjusts an opening direction of the intake port (6) based on single or multiple measurement results of the anemoscope (13).

4. The carbon dioxide capture system (1) of any one of claims 1 to 3, wherein
the intake unit (2) further includes a flow channel (7) from the intake port (6) to the electrolysis unit (E1-En), and
a cross-sectional area of the flow channel decreases (7) gradually away from the intake port (6).

5. The carbon dioxide capture system (1) of any one of claims 1 to 4, wherein the gas can be flowed into the electrolysis unit (E1-En) at temperature in a range of - 10°C to 50°C.

6. The carbon dioxide capture system (1) of any one of claims 1 to 5, further comprising:
a flow rate adjusting unit (12) which is located between the intake port (6) and the electrolysis unit (E1-En) and adjusts a gas flow rate flowing toward a downstream side; and
a first thermometer (21) measuring temperature of the gas taken in from the intake port (6) between the intake port (6) and the flow rate adjusting unit (12); and
a second thermometer (22) measuring the temperature of the gas flowing from the flow rate adjusting unit (12) toward the downstream side between the flow rate adjusting unit (12) and the electrolysis unit (E1-En).

7. The carbon dioxide capture system (1) of any one of claims 1 to 6, wherein the adsorbent of the electrolysis unit (E1-En) includes one or several redox-active compounds.

8. The carbon dioxide capture system (1) of claim 7, wherein the adsorbent of the electrolysis unit (E1-En) adsorbs the carbon dioxide in a reduction state and releases the carbon dioxide in an oxidation state, by an electrical response to the electric potential.

9. The carbon dioxide capture system (1) of claim 7 or 8, wherein
the adsorbent of the electrolysis unit (E1-En) further includes at least one of metal-organic frameworks and covalent-organic frameworks, and
the metal-organic frameworks and/or the covalent-organic frameworks include a molecule of the redox-active compound as a crosslinking moiety.

10. The carbon dioxide capture system (1) of claim 7 or 8, wherein
the electrolysis unit (E1-En) includes an electrolytic solution (51), and
the electrolytic solution (51) includes the redox-active compound.

11. The carbon dioxide capture system (1) of any one of claims 7 to 10, wherein the redox-active compound includes at least one of the groups of a carbonyl compound, a pyridyl compound, and an imide compound.

12. The carbon dioxide capture system (1) of any one of claims 1 to 9, and 11, wherein
the electrolysis unit (E1-En) includes a working electrode (42),
the working electrode (42) includes a current collector (46) and an adsorption layer (47) formed on a surface of the current collector (46), and
the adsorption layer (47) includes the adsorbent.

13. The carbon dioxide capture system (1) of any one of claims 1 to 8, 10, and 11, wherein
the electrolysis unit (E1-En) includes an electrolytic solution (51), and
the electrolytic solution (51) includes the adsorbent.

14. The carbon dioxide capture system (1) of any one of claims 1 to 13, wherein
the electrolysis unit (E1-En) includes a working electrode (42),
the working electrode (42) includes a current collector (46), and
the current collector (46) includes a porous body.

15. A carbon dioxide capture method, comprising:
taking in gas from an intake port (6) of an intake unit (2) by utilizing gas flow in an environment in which the intake unit (2) is located;
flowing the gas taken in from the intake port (6) of the intake unit (2) into an electrolysis unit (E1-En) in which an adsorbent is capable of adsorbing and releasing carbon dioxide by an electric response to an electric potential;
adjusting the electric potential to cause carbon dioxide contained in the gas flowing in from the intake port (6) to be adsorbed to the adsorbent and cause the carbon dioxide adsorbed on the adsorbent to be released from the adsorbent in the electrolysis unit (E1-En); and
capturing the carbon dioxide released from the adsorbent after adsorption to the adsorbent.
